# EUROPÄISCHE PATENTSCHRIFT

(11) **EP 4 201 637 B1**
(45) Veröffentlichungstag und Bekanntmachung des Hinweises auf die Patenterteilung: **24.12.2025**
(21) Anmeldenummer: 22212485.1
(22) Anmeldetag: 09.12.2022
(51) Int. Cl.: B29C 49/42, B29C 49/64

(54) **VORRICHTUNG UND VERFAHREN ZUM HERSTELLEN VON KUNSTSTOFFBEHÄLTNISSEN MIT NICHT KREISFÖRMIGEN QUERSCHNITTEN**
DEVICE AND METHOD FOR PRODUCING PLASTIC CONTAINERS HAVING NON-CIRCULAR CROSS SECTIONS
DISPOSITIF ET PROCÉDÉ DE FABRICATION DE RÉCIPIENTS EN PLASTIQUE DOTÉS DE SECTIONS TRANSVERSALES NON CIRCULAIRES

(30) Priorität: 20.12.2021 DE 102021133783
(43) Veröffentlichungstag der Anmeldung: 28.06.2023
(73) Patentinhaber: Krones AG, 93073 Neutraubling (DE)
(72) Erfinder: Philipp, Thomas, 93073 Neutraubling (DE); Piana, Stefan, 93073 Neutraubling (DE); Steger, Sebastian, 93073 Neutraubling (DE); Moewes, Simon, 93073 Neutraubling (DE); Niedermeier, Anton, 93073 Neutraubling (DE); Vogler, Daniel, 93073 Neutraubling (DE)
(74) Vertreter: Hannke Bittner & Partner mbB Regensburg

(56) Entgegenhaltungen:
- WO-A1-2021/122712
- WO-A1-2021/130243
- US-A1- 2011 309 048

## Beschreibung

Die vorliegende Erfindung bezieht sich auf eine Vorrichtung und ein Verfahren zum Herstellen von Kunststoffbehältnissen und insbesondere von Kunststoffbehältnissen mit nicht kreisförmigen Querschnitten. Aus dem Stand der Technik sind zahlreiche Vorrichtungen und Verfahren zum Herstellen von Kunststoffbehältnissen bekannt. Dabei werden üblicherweise Kunststoffvorformlinge erwärmt und in Umformungseinrichtungen wie etwa Blasformmaschinen (beispielsweise Streckblasmaschinen) zu Behältnissen umgeformt.

Dabei ist es aus dem Stand der Technik bekannt, auch Behältnisse zu blasen, welche andere als kreisförmige Querschnitte aufweisen, wie beispielsweise ovale Querschnitte. Dies ist mit Problemen verbunden, da nicht nur Blasformen eingesetzt werden müssen, welche von kreisförmigen Querschnitten abweichende Querschnitte aufweisen, sondern zusätzlich auch alternative Erwärmungen für die Kunststoffvorformlinge verwendet werden müssen.

Bei einem aus dem Stand der Technik bekannten Heizverfahren wird für die Erwärmung von Kunststoffvorformlingen zur Produktion nicht zylindrischer bzw. nicht ausreichend gleichförmiger Behälter ein Preferential Heating (bevorzugtes Heizverfahren) genutzt. Bei diesem Verfahren wird eine sinusoidale Temperaturverteilung in Tangentialrichtung an dem Kunststoffvorformling erreicht. Üblicherweise werden zwei thermische Maxima und zwei thermische Minima, welche sich jeweils gegenüberliegenden, angestrebt.

Die WO2021122712A1 beschreibt eine Vorrichtung zum Herstellen ovaler Behältnisse. In WO 20211/22712 A1 dient der Kurbelzapfen dazu, die Drehscheibe zu Beginn des Heizvorgangs korrekt auszurichten, indem er zwischen einem Satz aus zwei konvergierenden Rampen hindurchläuft, die entlang der Bewegungsbahn der Drehscheiben angeordnet sind. Der Kurbelzapfen wird somit automatisch in Bezug auf die Bewegungsrichtung der Drehscheiben stromaufwärts positioniert.

Um hieraus ovale Behältnisse in entsprechender Güte zu fertigen, müssen die Kunststoffvorformlinge stellungsgerecht in die Blasform eingegeben werden. Dies bedeutet, dass heiße Preform-Seiten und lange Behältnisseiten sowie kalte Preform-Seiten und kurze Behältnisseiten ausgerichtet sein müssen.

Die Anmelderin bietet für die Produktion solcher Behältnisse ein Pro-Shape-Verfahren an. Dabei wird der Kunststoffvorformling gleichmäßig erwärmt und anschließend mittels Prägeplatten zwei Seiten des Kunststoffvorformlings wieder abgekühlt. Sowohl für dieses Verfahren als auch für das Preferential Heating ist die orientierte Eingabe von Kunststoffvorformlingen in die Blasformen zwingend erforderlich.

Im Stand der Technik treten teilweise unterschiedliche Probleme auf. So ist es zum Teil schwierig, einen Übergabewinkel von +/-10 Grad einzuhalten. Daneben ist teilweise eine Bestimmung der Drehstellung der Kunststoffvorformlinge sehr aufwendig.

Der vorliegenden Erfindung liegt die Aufgabe zugrunde, verbesserte Vorrichtungen und Verfahren zum Herstellen von Behältnissen mit nicht kreisförmigem Querschnitt gemäß Anspruch 1 vorzuschlagen.

Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung gemäß Anspruch 1 zum Herstellen von Kunststoffbehältnissen weist eine Erwärmungseinrichtung zum Erwärmen von Kunststoffvorformlingen auf, wobei die Erwärmungseinrichtung eine Transporteinrichtung aufweist, welche die Kunststoffvorformlinge vereinzelt (also insbesondere mit einem vorgegebenen Abstand bezüglich einander) entlang eines vorgegebenen Transportpfads transportiert und diese Transporteinrichtung eine Vielzahl von Halteeinrichtungen zum Halten der Kunststoffvorformlinge aufweist und wenigstens eine Erwärmungseinheit vorgesehen ist, welche die Kunststoffvorformlinge erwärmt, wobei wenigstens eine Dreheinrichtung vorgesehen ist, welche die von den Halteeinrichtungen gehaltenen Kunststoffvorformlinge während ihres Transports durch die Erwärmungseinrichtung (und bevorzugt wenigstens auch zeitweise während deren Erwärmung) bezüglich deren Längsrichtungen dreht.

Weiterhin weist die Vorrichtung eine Umformungseinrichtung auf, welche die von der Erwärmungseinrichtung transportierten Kunststoffvorformlinge zu Kunststoffbehältnissen umformt, wobei diese Umformungseinrichtung wenigstens eine Umformungsstation aufweist, welche die Kunststoffvorformlinge durch Beaufschlagung mit einem fließfähigen und insbesondere gasförmigen Medium zu den Kunststoffbehältnissen umformt.

Weiterhin weist die Erwärmungseinrichtung eine Stelleinrichtung (bzw. eine Drehstellungsanpassungseinrichtung) auf, welche eine Einstellung einer Drehstellung der Kunststoffvorformlinge ermöglicht, wobei bevorzugt diese Stelleinrichtung wenigstens abschnittsweise entlang des Transportpfads der Kunststoffvorformlinge angeordnet ist.

Es wird darauf hingewiesen, dass im Folgenden der Begriff Stelleinrichtung verwendet wird, jedoch die entsprechende Einrichtung auch mit dem technisch genaueren Begriff Drehstellungsanpassungseinrichtung bezeichnet werden könnte.

Erfindungsgemäß weist die Vorrichtung eine erste entlang des Transportpfads der Kunststoffvorformlinge (und insbesondere entlang eines geradlinigen Abschnitts des Transportpfads) angeordnete Erfassungseinrichtung zur Erfassung einer Drehstellung der Halteeinrichtungen und/oder der Kunststoffvorformlinge bezüglich deren Längsrichtung auf, wobei die Kunststoffvorformlinge und insbesondere die von der Umformungseinrichtung umzuformenden Kunststoffvorformlinge und/oder die von der Erwärmungseinrichtung erwärmten Kunststoffvorformlinge wenigstens eine Markierung aufweisen, welche eine Erfassung der Drehstellung der Kunststoffvorformlinge ermöglicht.

Es ist dabei möglich, dass diese Markierung bereits an den hergestellten Kunststoffvorformlingen vorhanden ist, es wäre jedoch auch denkbar und bevorzugt, dass diese Markierung vor der Erwärmungseinrichtung an den Kunststoffvorformlingen angebracht wird, es wäre jedoch auch möglich, dass die Markierung während der Erwärmung aufgebracht wird, oder auch nach der Erwärmung der Kunststoffvorformlinge.

Bevorzugt ist die Erfassungseinrichtung dazu geeignet und bestimmt, eine Markierung der Kunststoffvorformlinge zu erfassen, um so die Drehstellung der Kunststoffvorformlinge zu bestimmen.

Bei einer weiteren erfindungsgemäßen Ausgestaltung erstreckt sich diese Stelleinrichtung wenigstens abschnittsweise entlang des Transportpfads der Kunststoffvorformlinge (und insbesondere entlang eines geradlinigen Abschnitts des Transportpfads) und die Vorrichtung weist bevorzugt eine erste entlang des Transportpfads der Kunststoffvorformlinge angeordnete Erfassungseinrichtung zur Erfassung einer Drehstellung der Kunststoffvorformlinge bezüglich deren Längsrichtung auf.

Es wird darauf hingewiesen, dass beide Ausgestaltungen (auch unabhängig voneinander) die oben genannten erfindungsgemäßen Aufgaben lösen können.

Bevorzugt weist die Transporteinrichtung der Erwärmungseinrichtung ein umlaufendes Transportmittel auf, an dem die Halteeinrichtungen angeordnet sind. Besonders bevorzugt handelt es sich bei diesem Transportmittel um eine Transportkette. Bevorzugt transportiert die Transporteinrichtung die Kunststoffvorformlinge wenigstens abschnittsweise entlang eines geradlinigen Transportpfads. Bevorzugt transportiert die Transporteinrichtung die Kunststoffvorformlinge wenigstens abschnittsweise entlang eines gekrümmten Transportpfads und insbesondere entlang eines kreisförmig gekrümmten Transportpfads.

Bevorzugt erfolgt eine Erwärmung der Kunststoffvorformlinge während eines geradlinigen Transports derselben.

Bei einer weiteren vorteilhaften Ausführungsform ist zwischen der Erwärmungseinrichtung und der Umformungseinrichtung eine weitere Transporteinrichtung vorgesehen, welche die Kunststoffvorformlinge transportiert. Bei dieser weiteren Transporteinrichtungen kann es sich beispielsweise um ein Transportrad oder einen Transportstern handeln, an dem bevorzugt ebenfalls Halteeinrichtungen zum Halten der Kunststoffvorformlinge angeordnet sind. Bei einer weiteren vorteilhaften Ausführungsform handelt es sich bei der Erwärmungseinrichtung um einen Ofen und insbesondere einen Infrarotofen, der die Kunststoffvorformlinge erwärmt. Bevorzugt sind die Heizeinrichtungen stationär angeordnet und die Kunststoffvorformlinge werden an diesen vorbeitransportiert. Bevorzugt ist eine Vielzahl von Heizeinrichtungen stationär entlang des Transportpfads der Kunststoffvorformlinge angeordnet. Bevorzugt sind diese Heizeinrichtungen entlang geradliniger Abschnitte des Transportpfads angeordnet. Bei der Erwärmungseinrichtung könnte es sich jedoch auch um einen Mikrowellenofen handeln.

Bei einer weiteren bevorzugten Ausführungsform ist eine Heizleistung der einzelnen Heizeinrichtungen steuerbar und insbesondere regelbar. Bevorzugt ist die Heizleistung der einzelnen Heizeinrichtungen unabhängig voneinander steuerbar und bevorzugt regelbar. Bevorzugt weist wenigstens eine Heizeinrichtung und weisen bevorzugt mehrere Heizeinrichtungen jeweils (in der Längsrichtung der Kunststoffvorformlinge übereinander angeordnete) Heizlampen auf, welche sich entlang der Transportrichtung der Kunststoffvorformlinge erstrecken. Bevorzugt ist eine Heizleistung dieser Heizlampen einstellbar.

Bevorzugt bewirkt die Stelleinrichtung, dass alle Kunststoffvorformlinge die Erwärmungseinrichtung in einer definierten Drehstellung verlassen. Bei einer weiteren vorteilhaften Ausführungsform weist die Erfassungseinrichtung eine Bildaufnahmeeinrichtung auf.

Bei einer besonders bevorzugten Ausführungsform weisen die Halteeinrichtungen jeweils Halteelemente in Form von Dornen auf, welche in die Mündungen der Kunststoffvorformlinge eingreifen, um diese zu halten. Bei einer bevorzugten Ausführungsform weist die Vorrichtung Bewegungseinrichtungen auf, welche die Haltedorne in die Kunststoffvorformlinge einführen. Bei einer bevorzugten Ausführungsform sind diese Halteelement nicht nur bezüglich einer vorgegebenen Drehachse und/oder der Längsrichtung der Kunststoffvorformlinge drehbar sondern bevorzugt auch in der Längsrichtung der Kunststoffvorformlinge bewegbar.

Bei einer bevorzugten Ausführungsform weist die Vorrichtung wenigstens eine Antriebseinrichtung auf, welche bewirkt, dass die einzelnen Kunststoffvorformlinge, die von unterschiedlichen Halteeinrichtungen gehalten werden in der gleichen Weise bezüglich ihrer Längsrichtung gedreht werden. dabei ist es denkbar, dass die Drehbewegung der Kunststoffvorformlinge durch die Bewegung der Kunststoffvorformling entlang des Transportpfads bewirkt wird, etwa, in dem an den Halteeinrichtungen Zahnräder angeordnet sind, welche mit stationär angeordneten Zahnstangen zusammenwirken.

Bevorzugt ist die Umformungseinrichtung dazu geeignet und bestimmt, Kunststoffbehältnisse mit einem von einem kreisförmigen Querschnitt abweichenden Querschnitt herzustellen. Dabei kann es sich beispielsweise um einen polygonalen Querschnitt, um einen elliptischen Querschnitt, um einen ovalen Querschnitt und dergleichen handeln.

Bevorzugt weist die Umformungseinrichtung einen bewegbaren und insbesondere drehbaren Träger auf, an dem eine Vielzahl von Umformungsstationen zum Umformen der Kunststoffvorformlinge zu den Kunststoffbehältnissen angeordnet ist. Bevorzugt weisen diese Umformungsstationen jeweils Beaufschlagungseinrichtungen auf, welche die Kunststoffvorformlinge mit einem gasförmigen Medium beaufschlagen. Bevorzugt weisen die Umformungsstationen jeweils stangenartige Körper auf, welche in die Kunststoffvorformlinge einführbar sind, um diese in deren Längsrichtung zu dehnen.

Bevorzugt weis die Vorrichtung eine Zuordnungseinrichtung auf, welche jedem von der Erwärmungseinrichtung erwärmten Kunststoffvorformling eine bestimmte Umformungsstation zuordnet, welche diesen Kunststoffvorformling zu einem Kunststoffbehältnis umformt.

Bei einer weiteren Ausführungsform weist die Vorrichtung wenigstens eine Markierungseinrichtung auf, welche dazu geeignet und bestimmt ist, an den Kunststoffvorformlingen eine Markierung anzubringen, welche eine Erfassung einer Drehstellung der Kunststoffvorformlinge ermöglicht, wobei bevorzugt die Markierungseinrichtung eine lasergestützte Markierungseinrichtung oder eine Druckeinrichtung ist. Bevorzugt handelt es sich bei der Markierung um eine dauerhafte Markierung, welche bevorzugt während der gesamten Lebenszeit des aus dem Kunststoffvorformling gefertigten Behältnisses an diesem verbleibt. Bevorzugt handelt es sich bei der Markierung um eine optisch und berührungslos erfassbare Markierung.

Bevorzugt ist die Markierungseinrichtung entlang des Transportpfads der Kunststoffvorformlinge durch die Erwärmungseinrichtung vorgesehen. Besonders bevorzugt ist die Markierungseinrichtung näher an einem Ende der Transportstrecke entlang derer die Kunststoffvorformlinge erwärmt werden als am Anfang angeordnet. So ist es möglich, dass die Kunststoffvorformlinge zunächst geradlinig transportiert werden, anschließend in einem Umlenkbereich die Transportrichtung umgekehrt wird und schließlich die Kunststoffvorformlinge wieder zurück transportiert werden. Besonders bevorzugt ist die Markierungseinrichtung in diesem zweiten Transportpfadabschnitt, in dem die Kunststoffvorformlinge zurücktransportiert werden, angeordnet.

Besonders bevorzugt ist die Markierungseinrichtung dazu geeignet und bestimmt, in einem Gewindebereich und/oder an einen Tragring der Kunststoffvorformlinge die besagte Markierung anzubringen. Besonders bevorzugt kann es sich hierbei um (wenigstens) eine linienförmige Markierung handeln. Bei einer weiteren bevorzugten Ausführungsform bringt die Markierungseinrichtung die Markierung an einem Bereich des Kunststoffvorformlings an, der im späteren Verlauf der Herstellung des Kunststoffbehältnisses durch einen Behältnisverschluss und insbesondere einen Drehverschluss abgedeckt wird. Besonders bevorzugt bringt die Markierungseinrichtung die Markierung an einem Abschnitt des Kunststoffvorformlings an, der nicht bei dem Umformungsprozess gedehnt und/oder expandiert wird.

So ist es möglich, dass in einem Bereich einer Prozesskurve der Erwärmungseinrichtung und insbesondere des Preferential Heatings orthogonal zu einer Transportrichtung beispielsweise einer Kettenvorschubrichtung mittels der Markiereinrichtung die Markierung aufgebracht wird. So ist es bei entsprechender Justage des Markiersystems möglich, dass die Markierung stets mittig auf eine heiße Seite des Kunststoffvorformlings aufgebracht wird. Wie erwähnt, handelt es sich bei der Markierungseinrichtung um eine Lasereinrichtung oder um eine Druckeinrichtung.

Bevorzugt wird während des nachfolgenden Umformungsprozesses, insbesondere eines Blasprozesses mittels einer Kamera und einer Bildverarbeitung die Lage dieser Markierung relativ zu einer Formtrennnaht gemessen. Dabei ist es möglich, dass die Vorrichtung eine Skala oder eine Soll-Markierung auf der Form bzw. Umformungsstation aufweist, um relativ zu dieser messen zu können.

Bei einer weiteren vorteilhaften Ausführungsform ist die Markierungseinrichtung entlang des Transportpfads angeordnet, entlang dessen die Kunststoffvorformlinge während ihrer Erwärmung transportiert werden. Besonders bevorzugt ist die Markierungseinrichtung zwischen einem Einlass und einem Auslass der Erwärmungseinrichtung angeordnet. So ist es möglich, dass die Erwärmungseinrichtung eine Vielzahl von Heizeinrichtungen wie beispielsweise Heizkästen aufweist, die stationär an der Erwärmungseinrichtung angeordnet sind. Eine Markierung kann beispielsweise nach dem letzten dieser Heizkästen bzw. nach der letzten dieser Heizeinrichtungen vorgenommen werden, insbesondere aber in einem Bereich, in dem die Halteeinrichtungen, beispielsweise deren Spindeln, noch von einer Prozesskurve der Erwärmungseinrichtung geführt werden. Daneben wäre jedoch auch ein Markieren während des Heizens bzw. während der Erwärmung möglich.

Bei einer weiteren vorteilhaften Ausführungsform weist die Vorrichtung eine Ausrichtungseinrichtung auf, welche eine Drehstellung der Kunststoffvorformlinge bezüglich deren Längsrichtung ausrichtet, wobei diese Ausrichtungseinrichtung bevorzugt entlang des Transportpfads der Kunststoffvorformlinge vor oder nach der Erwärmungseinrichtung und bevorzugt vor der Stelleinrichtung angeordnet ist. Dies bedeutet, dass bereits vor der Erwärmung eine Ausrichtung der Kunststoffvorformlinge erfolgen kann. Auf diese Weise kann beispielsweise eine Anpassung einer gewünschten Gewindestellung des Kunststoffvorformlings erfolgen. Dies ist insbesondere dann bedeutsam, wenn auf die nicht kreisförmigen Behältnisse auch nicht kreisförmige Verschlüsse aufgeschraubt werden sollen, die infolgedessen stellungsgerecht auf die dann hergestellten Behältnisse aufgeschraubt werden müssen.

Bei einer weiteren vorteilhaften Ausführungsform weist die Vorrichtung eine zweite Erfassungseinrichtung zur Erfassung der Drehstellung der Kunststoffvorformlinge bezüglich deren Längsrichtung auf. Dies bedeutet, dass bevorzugt entlang des Transportpfads der Kunststoffvorformlinge wenigstens zweimal deren Drehstellung erfasst wird. Dies ist insbesondere dann vorgesehen, wenn Vorformlinge mit einer Markierung verwendet werden, beispielsweise Kunststoffvorformlinge, welche bereits vor dem Erwärmungsvorgang eine Markierung aufweisen. Bevorzugt ist dabei die erste dieser Erfassungseinrichtungen in der Erwärmungseinrichtung angeordnet und besonders bevorzugt die zweite Erfassungseinrichtung im Bereich der Umformungseinrichtung.

Bei einer weiteren bevorzugten Ausführungsform weist die Vorrichtung eine Zuordnungseinrichtung auf, welche einer Erfassung eines bestimmten Kunststoffvorformlings mittels der ersten Erfassungseinrichtung eine Erfassung dieses Kunststoffvorformlings mittels der zweiten Erfassungseinrichtung zuordnet.

So ist es möglich, dass mittels der ersten Erfassungseinrichtung eine Drehstellung des Kunststoffvorformlings erfasst wird und mittels der zweiten Erfassungseinrichtung ebenfalls eine Drehstellung dieses Kunststoffvorformlings (oder eines hieraus erzeugten Kunststoffbehältnisses) zugeordnet wird und diese Drehstellungen miteinander verglichen werden.

Eine derartige Zuordnung ist möglich, da die Kunststoffvorformlinge bevorzugt stets vereinzelt transportiert werden und daher bekannt ist, wie viele Kunststoffvorformlinge sich zwischen den beiden Erfassungseinrichtungen befinden. Auch können zur Zuordnung der Erfassungsergebnisse weitere Größen wie etwa eine Transportgeschwindigkeit der Kunststoffvorformlinge berücksichtigt werden.

Bei einer weiteren bevorzugten Ausführungsform weist die Vorrichtung eine Vergleichseinrichtung auf, welche ein Erfassungsergebnis (beispielsweise ein aufgenommenes Bild oder eine Auswertung desselben) der ersten Erfassungseinrichtung mit einem Erfassungsergebnis der zweiten Erfassungseinrichtung (jedoch desselben Kunststoffvorformlings) vergleicht und welche bevorzugt einen für diesen Vergleich charakteristischen Wert ausgibt.

Wenn Kunststoffvorformlinge mit einer Markierung zur "Neck-Orientierung" eingesetzt werden, muss nicht unbedingt eine zusätzliche Markierung erfolgen, sondern die Kunststoffvorformlinge können stellungsgerecht in die Halteeinrichtungen der Erwärmungseinrichtung eingebracht bzw. auf entsprechenden Dornen aufgesteckt werden.

Nach dem Umformungsprozess kann dann die Lage der Markierung relativ zur Behältnisausrichtung gemessen werden. Wenn beispielsweise eine erste Position für ein Detektionssystem genutzt wird, kann gegebenenfalls eine Skala oder Soll-Markierung auf der Form oder der Umformungsstation genutzt werden, um dann relativ zu messen.

Bei dieser Ausgestaltung entfällt ein zusätzliches Markieren der Kunststoffvorformlinge. Daneben ist auch eine Überprüfung der Behältnisse möglich anstelle einer komplizierteren Ermittlung der Position der Kunststoffvorformlinge in der Blasform. Daneben ist auch eine zusätzliche Ausrichtung der Drehstellungen möglich. Andererseits muss bei dieser Vorgehensweise ein stellungsgerechtes Aufstecken der Kunststoffvorformlinge auf die Greifer der Erwärmungseinrichtung erfolgen.

Wenn weiterhin Kunststoffvorformlinge mit einer Markierung zur Halsringorientierung eingesetzt werden, kann die Lage dieser Markierung während des Erwärmungsprozesses mit einem ersten Detektionssystem und während des Blasprozesses (einer ersten Position) bzw. nach dem Umformungsprozess (von einer zweiten Position) mit dem zweiten Detektionssystem gemessen werden und auf diese Weise besonders bevorzugt ein Übergabewinkel ausgerechnet werden.

Bei einer weiteren bevorzugten Ausführungsform weist die Vorrichtung eine Fülleinrichtung auf, welche in der Transportrichtung der Kunststoffbehältnisse nach der Umformungseinrichtung angeordnet ist und welche dazu geeignet und bestimmt ist, die Behältnisse mit einem fließfähigen Produkt zu befüllen. Bei diesem Produkt kann es sich beispielsweise um ein Lebensmittelprodukt handeln aber auch um andere Produkte, wie Öle, Reinigungsmittel oder dergleichen.

Bei einer weiteren bevorzugten Ausführungsform weist die Vorrichtung eine Verschließeinrichtung auf, welche dazu geeignet und bestimmt ist, die befüllten Behältnisse zu verschließen. Bevorzugt ist die Verschließeinrichtung dazu geeignet und bestimmt, Schraubverschlüsse an den Behältnissen anzubringen.

Bei Einsatz des zweiten Detektionssystems an einer ersten Position kann wie oben erwähnt wieder eine Skala oder Soll-Markierung auf der Form bzw. der Umformungsstation genutzt werden, um relativ dazu zu messen.

Es wäre auch denkbar, Kunststoffvorformlinge mit einer umlaufenden Markierung zu verwenden, beispielsweise mit einem Strichcode am Umfang des Kunststoffvorformlings zwischen Tragring und Verschlussring oder beispielsweise auf einer Tragring-Ober- oder Unterseite. In diesem Falle kann die Lage der Markierung während des Erwärmungsprozesses mittels einer ersten Detektionseinrichtung und während bzw. nach dem Umformungsprozess mittels einer zweiten Detektionseinrichtung gemessen werden und somit kann der Übergabewinkel errechnet werden.

Bei einer weiteren vorteilhaften Ausführungsform weist die Vorrichtung eine Drehstellungskorrektureinrichtung auf, welche dazu geeignet und bestimmt ist, eine Drehstellung von Behältnissen in einer definierten Weise zu ändern, insbesondere um auf diese Weise eine (insbesondere durch eine Erfassungseinrichtung erfasste) Ist- Drehstellung an eine Soll - Drehstellung anzupassen.

Dabei ist es möglich, dass diese Markierung bereits während der Herstellung der Kunststoffvorformlinge, beispielsweise während des Spritzgießens auf den Kunststoffvorformling aufgebracht wird.

Daneben ist es auch möglich, dass keine extra Markierung auf dem Kunststoffvorformling angeordnet ist, sondern eine Detektion eines signifikanten Merkmals des Kunststoffvorformlings, beispielsweise eines Gewindes oder eines Gewindeabstandes (zum Beispiel der Abstand der ersten unteren Gewindeflanke zu einem Verschlussring) erfasst wird und die Lage dieser Markierung während des Erwärmungsprozesses und nach dem Umformungsprozess gemessen wird und auf diese Weise ein Übergabewinkel gemessen oder errechnet wird.

Bei einer weiteren bevorzugten Ausführungsform weist wenigstens eine Erfassungseinrichtung eine Bildaufnahmeeinrichtung auf, welche dazu geeignet ist, ein Bild der Kunststoffvorformlinge in einer zu deren Längsrichtung senkrechten Richtung aufzunehmen. Bevorzugt ist diese Erfassungseinrichtung dazu geeignet und bestimmt, mehrere seitliche Bilder des Kunststoffvorformlings aufzunehmen. Dabei wäre es möglich, dass mehrere Bildaufnahmeeinrichtungen vorgesehen sind, welche eine Bildaufnahme des Kunststoffvorformlings aus mehreren Richtungen ermöglichen. Auch wäre es denkbar, dass Spiegel verwendet werden, um eine Aufnahme des Kunststoffvorformlings aus mehreren Richtungen zu ermöglichen. Bei einer weiteren bevorzugten Ausführungsform weist wenigstens eine Erfassungseinrichtung eine Bildaufnahmeeinrichtung auf, welche dazu geeignet ist, ein Bild der Kunststoffvorformlinge in deren Längsrichtung aufzunehmen. Diese Erfassungseinrichtung ist dabei insbesondere dazu geeignet und bestimmt, ein Bild eines Tragrings und/oder eines Gewindes des Behältnisses aufzunehmen.

Diese Vorgehensweise ist auch mittels eines Maschinenlernsystems und/oder einer künstlichen Intelligenz umsetzbar. So kann beispielsweise eine hohe Anzahl von Bildern eines drehenden Kunststoffvorformlings bei unterschiedlicher Beleuchtung aufgenommen werden und diese Bilder können entsprechend ausgewertet werden.

Sollte eine erforderliche Genauigkeit beispielsweise aufgrund einer zu flachen Geschwindesteigung nicht erreichbar sein, wäre es auch möglich, eine Optimierung durch eine zusätzliche Auswertung vertikaler Unterbrechungen des Gewindes durchzuführen.

Die Stelleinrichtung ist eine mechanisch wirkende Stelleinrichtung und bevorzugt weist die Stelleinrichtung eine an der Halteeinrichtung angeordnete Führungsrolle auf, die mit wenigstens einer ersten Führungskurve zusammenwirkt, um eine Drehstellung der Kunststoffvorformlinge einzustellen.

Bei einer bevorzugten Ausführungsform weist die Halteeinrichtung eine Platte auf, an der diese Führungsrolle angeordnet ist, wobei diese Führungsrolle bevorzugt exzentrisch angeordnet ist, sodass durch ein Verschwenken der Führungsrolle auch eine Drehbewegung der Halteeinrichtungen und insbesondere der daran gehaltenen Kunststoffvorformlinge auftritt. Bevorzugt ist die Halteeinrichtung (oder sind Bestandteile der Halteeinrichtung) bezüglich einer Drehachse drehbar, die parallel zu der Längsrichtung der Kunststoffvorformlinge verläuft. Besonders bevorzugt ist auch die besagte Führungsrolle bezüglich einer Drehachse drehbar, die parallel zu der Längsrichtung der Kunststoffvorformlinge ist.

Bevorzugt weist die Stelleinrichtung wenigstens zwei und bevorzugt wenigstens drei Führungskurven auf, welche entlang des Transportpfads der Kunststoffvorformlinge hintereinander angeordnet sind. Dabei kann es sich bei der ersten Führungskurve um eine Fangkurve handeln, welche die Position der Führungsrolle vorbestimmt. Bei einer weiteren Ausführungsform handelt es sich bei den zweiten Führungskurve um eine Führungskurve, welche eine Ausrichtung der Führungsrolle bewirkt.

Bei einer weiteren bevorzugten Ausführungsform ist wenigstens eine und besonders bevorzugt sind mehrere dieser Führungskurven in einem geradlinigen Abschnitt des Transportpfads angeordnet. Bevorzugt verläuft wenigstens eine dieser Führungskurven und besonders bevorzugte verlaufen mehrere dieser Führungskurven geradlinig.

Eine Führungskurve ist verstellbar, um die Drehstellung der Kunststoffvorformlinge zu verändern. Eine Verstellung dieser Führungskurve in Abhängigkeit von einer Drehstellung des Kunststoffvorformlings durchführbar und insbesondere einer Drehstellung, welche durch die wenigstens eine Erfassungseinrichtung ermittelt wird oder wurde. Besonders bevorzugt ist diese Führungskurve senkrecht zu dem Transportpfad der Kunststoffvorformlinge veränderbar und insbesondere in einer horizontalen Ebene. Besonders bevorzugt ist die besagten Führungskurve linear verschiebbar, und auf diese Weise kann eine Winkelstellung der Führungsrolle verändert werden.

Bei einer besonders bevorzugten Ausführungsform ist die oben erwähnte Erfassungseinrichtung entlang der Stelleinrichtung angeordnet. Dies bedeutet, dass die Drehstellung der Kunststoffvorformlinge erfasst wird, während diese mit den besagten Führungskurven ausgerichtet werden.

Bei einer weiteren vorteilhaften Ausführungsform ist die Erfassungseinrichtung dazu geeignet und bestimmt, eine Position der Führungsrolle gegenüber einer Längsrichtung der Halteeinrichtungen und/oder gegenüber einer Längsrichtung des Kunststoffvorformlings zu erfassen.

Dabei ist es möglich, dass die Führungsrolle bzw. Anlenkrolle (beispielsweise der Schaltzeitpunkt eines Sensors) mit einem Grob- oder Feintakt abgeglichen wird, um eine Aussage darüber zu treffen, ob eine Spindel (bzw. eine Halteeinrichtung) vor oder nach allen (betrachtet in der Transportrichtung der Kunststoffvorformlinge) ausgerichtet ist.

Hierbei handelt es sich um eine bevorzugte Lösung. Alternativ könnte auch der zeitliche Abstand zwischen detektierten Anlenkrollen bzw. Führungsrollen betrachtet werden, da angenommen werden kann, dass die meisten Spindeln korrekt orientiert sind. Auf diese Weise könnte man aus einem zu kurzen Zeitintervallen gegenüber einem Soll-Zeitintervall zwischen zwei detektierten Anlenkrollen schließen, dass die zuletzt detektierte Anlenkrolle fälschlicherweise voreilend ausgerichtet war. Daneben wäre es auch möglich, dass aus einem zu großen Zeitintervall gegenüber dem Soll-Zeitintervall zwischen zwei Detektionen geschlossen wird, dass die zuletzt detektierte Anlenkrolle und/oder Spindel nun wieder korrekt ausgerichtet ist.

Bei einer weiteren vorteilhaften Ausführungsform weist die Vorrichtung eine Prozessoreinrichtung auf, welche dazu geeignet und bestimmt ist, aus von der Erfassungseinrichtung ausgegebenen Werten eine Aussage über einen charakteristischen Zustand einer Stelleinrichtung zu ermitteln. So kann beispielsweise festgestellt werden, dass eine Häufung von Fehlerzuständen auftritt. Auf diese Weise kann etwa auf einen Verschleiß der Führungsrolle oder der Führungskurven geschlossen werden.

Bei einer weiteren vorteilhaften Ausführungsform ist die Erfassungseinrichtung dazu geeignet und bestimmt, berührungslos einen Fehlerzustand der Stelleinrichtung zu erfassen.

Bei einer weiteren vorteilhaften Ausführungsform weist die Stelleinrichtung ein erstes Stellmittel auf, welches dazu geeignet und bestimmt ist, die Führungsrolle in eine erste vorgegebene Position bezüglich der Längsrichtung zu bewegen und/oder zu schwenken. Dabei ist es möglich, dass dieses erste Stellmittel kammartig ausgeführt ist und zur Vororientierung der Führungsrollen bzw. Anlenkrollen in einen vorgegebenen Winkel dient.

Bei einer weiteren vorteilhaften Ausführungsform weist die Stelleinrichtung ein zweites Stellmittel auf, welches bevorzugt in der Transportrichtung der Kunststoffvorformlinge nach dem ersten Stellmittel angeordnet ist und welches dazu geeignet und bestimmt ist, die Führungsrolle in eine erste vorgegebene Position bezüglich der Längsrichtung zu bewegen oder zu schwenken.

Bei einer bevorzugten Ausführungsform ist die Markierung der Kunststoffvorformlinge in einem Bereich einer Mündung und/oder in einem Bodenbereich des Kunststoffvorformlings, insbesondere einem Bodenkuppenbereich angeordnet. Bevorzugt kann die Mündung in einem Bereich des Kunststoffvorformlings angeordnet sein, der bei dem Umformungsprozess nicht verstreckt wird oder auch in einem Bereich, der bei dem Umformungsprozess nicht verstreckt wird (insbesondere dem Gewindebereich und/oder dem Mündungsbereich).

Bevorzugt wird die Markierung in einem Bereich entlang dessen Transportpfad angebracht, in dem keine Drehung des Kunststoffvorformlings bezüglich seiner Längsrichtung erfolgt. Bevorzugt wird die Markierung in einem Bereich entlang dessen Transportpfad angebracht in dem eine Drehung des Kunststoffvorformlings bzgl. seiner Längsrichtung verhindert ist, insbesondere in einem Bereich der oben erwähnten Kurven und/oder der Stelleinrichtung.

Die Aufbringung der Markierung kann dabei beispielsweise mittels Laser oder mittels eines Stempelwerkzeugs oder eines Aufdrucks erfolgen.

Die Anbringung der Markierung in einem Bodenkuppenbereich hat den Vorteil einer erleichterten axialen Inspektion, welche in der Regel genauer ist als eine radiale Inspektion. Eine Inspektionseinheit zum Bewerkstelligen dieser Inspektion ist aus der DE 10 2006 047150A1 bekannt.

Dabei ist es möglich, zunächst einen Testlauf mit einem Kunststoffvorformling mit einer manuell angebrachten Markierung durchzuführen, und erst anschließend ein Behältnis zu blasen. Bei dieser Vorgehensweise ist es möglich, dass eine Inspektion der Kunststoffvorformlinge in der Erwärmungseinrichtung entfällt, da bereits eine feste bzw. eindeutige (Dreh)lage der Kunststoffvorformlinge gegeben ist.

Allgemein ist zu beachten, dass die Lage der Kunststoffvorformlinge in einer Transporteinrichtung, beispielsweise im Stern ist stark spielbehaftet ist. Auf diese Weise kann es zu einer evtl. ungenauen bzw. unsauberen Markierung kommen. Auch kann es zu ungenauen Messungen kommen, z.B. bei Markierungen im Kuppenbereich durch nicht zentrierte Messungen.

Beim Markieren der Kuppe der Kunststoffvorformlinge wird bevorzugt vorab geprüft, ob dieser Bereich aufgrund des Anspritzpunktes überhaupt für eine Detektion geeignet ist. Weiterhin ist es denkbar, dass Markierungen im Kuppenbereich bei der Verstreckung des Materials Probleme bereiten können.

Daneben sind Markierungen außerhalb des Mundstücks (z.B. in der Kuppe) während des Blasvorgangs von außen nicht sichtbar, so dass bevorzugt eine Inspektion hinsichtlich dieser Markierungen außerhalb des Umformungsvorgangs erfolgt.

Die vorliegende Erfindung ist weiterhin auf ein Verfahren gemäß Anspruch 9 zum Herstellen von Kunststoffbehältnissen gerichtet, wobei Kunststoffvorformlinge mit einer Erwärmungseinrichtung erwärmt werden, wobei die Erwärmungseinrichtung eine Transporteinrichtung aufweist, welche die Kunststoffvorformlinge entlang eines vorgegebenen Transportpfads vereinzelt transportiert und diese Transporteinrichtung eine Vielzahl von Halteeinrichtungen aufweist, welche die Kunststoffvorformlinge halten und wenigstens eine Erwärmungseinheitvorgesehen ist, welche die Kunststoffvorformlinge erwärmt, und wobei weiterhin eine Dreheinrichtung die von den Halteeinrichtungen gehaltenen Kunststoffvorformlinge während ihres Transports durch die Erwärmungseinrichtung bezüglich deren Längsrichtungen dreht und wobei weiterhin eine Umformungseinrichtung die von der Erwärmungseinrichtung transportierten Kunststoffvorformlinge zu Kunststoffbehältnissen umformt, wobei diese Erwärmungseinrichtung wenigstens eine Umformungsstation aufweist, welche die Kunststoffvorformlinge durch Beaufschlagung mit einem fließfähigen (und insbesondere gasförmigen) Medium zu den Kunststoffbehältnissen umformt.

Weiterhin weist die Erwärmungseinrichtung eine Stelleinrichtung auf, welche eine Drehstellung der Kunststoffvorformlinge (insbesondere während deren Transport entlang deren Transportpfad) ändert und eine erste entlang des Transportpfads der Kunststoffvorformlinge angeordnete Erfassungseinrichtung erfasst die Drehstellung der Kunststoffvorformlinge bezüglich deren Längsrichtung.

Bei einem ersten erfindungsgemäßen Verfahren weisen die von der Erwärmungseinrichtung erwärmten Kunststoffvorformlinge wenigstens eine Markierung auf, welche eine Erfassung der Drehstellung der Kunststoffvorformlinge ermöglicht.

Bei einem zweiten erfindungsgemäßen Verfahren erfasst eine zweite entlang des Transportpfads angeordnete Erfassungseinrichtung eine Drehstellung der Kunststoffvorformlinge.

Es wird darauf hingewiesen, dass die beiden hier beschriebenen Verfahren unabhängig voneinander aber auch gemeinsam Anwendung finden können.

Bei einem vorteilhaften Verfahren bringt eine Markierungseinrichtung an den Kunststoffvorformlingen eine Markierung an, welche die Erfassung der Drehstellung der Kunststoffvorformlinge bezüglich deren Längsrichtung ermöglicht, wobei die Markierung bevorzugt während der Erwärmung der Kunststoffvorformlinge angebracht wird.

Bei einer weiteren vorteilhaften Ausführungsform wird die Drehstellung der Kunststoffvorformlinge mittels einer mechanischen Stelleinrichtung und insbesondere mittels wenigstens einer und bevorzugt mehreren Führungskurven verändert. Bevorzugt erfolgt eine Verstellung dieser Führungskurve in Abhängigkeit von einer Drehstellung des Kunststoffvorformlings. Besonders bevorzugt wird die Drehstellung des Kunststoffvorformlings durch die wenigstens eine Erfassungseinrichtung ermittelt.

Bei einem weiteren bevorzugten Verfahren wird die Markierung in einem Bereich der Stelleinrichtung angebracht, d.h. insbesondere während die Kunststoffvorformlinge durch die Stelleinrichtung transportiert werden.

Bevorzugt wird in dem Bereich der preferential heating Prozesskurve, d.h. bevorzugt während die preferential heating Spindeln in der Kurve geführt sind und somit deren Orientierung bekannt ist, eine Markierung, insbesondere im Kuppenbereich der Kunststoffvorformlinge, insbesondere mit einem Laser bzw. Druckverfahren oder mechanisch z.B. durch einen Stempel aufgebracht.

Bei einem weiteren bevorzugten Verfahren erfasst eine Erfassungseinrichtung eine Position der Markierung und erfasst bevorzugt die Position der Markierung unmittelbar vor dem Umformungsprozess oder nach dem Umformungsprozess.

Nach dem Blasprozess wird mittels Kamera (vorzugsweise in axialer Ausrichtung zum Kunststoffvorformling) und Bildverarbeitung die Lage dieser Markierung relativ zum Abdruck der Formtrennnaht und/oder relativ zur Flaschenform und/oder relativ zu anderen markanten Bereichen, gemessen.

Aus der Lage der Markierung relativ zur Spindel und dem Messwert kann der Übergabewinkel berechnet werden.

Falls die Markierung im Kuppenbereich des Kunststoffvorformlings angebracht wird, ist zu berücksichtigen, dass der anschließende Blasformprozess die Erkennung der Markierung erschweren kann. So kann beispielsweise die Form der Markierung so stark verzerrt sein, dass keine Detektion mehr möglich ist oder die Lage der Markierung im verstreckten Bereich kann aufgrund des Blasprozesses verfälscht werden.

Bei einem weiteren bevorzugten Verfahren wird - bevorzugt unmittelbar - vor Beginn bzw. während des Blasprozesses mittels Kamera (vorzugsweise in axialer Ausrichtung zum Kunststoffvorformling) und Bildverarbeitung die Lage dieser Markierung relativ zur Form bzw. Formtrennnaht bzw. Soll - Markierung an der Form gemessen.

In diesem Fall wird die Messgenauigkeit nicht durch den Blasprozess beeinflusst, da die Messung davor erfolgen kann.

Bei einem weiteren bevorzugten Verfahren erfolgt das Anbringen der Markierung an den Kunststoffvorformlingen vor deren Erwärmung.

Besonders bevorzugt erfolgt ein Anbringen der Markierung bevor die Kunststoffvorformlinge der Erwärmungseinrichtung zugeführt werden und/oder bevor Halteeinrichtungen der Erwärmungseinrichtung wie insbesondere deren Haltedorne die Kunststoffvorformlinge greifen und/oder in deren Mündungen einfahren.

Bevorzugt erfolgt daher eine Markierung der Kunststoffvorformlinge während diese mittels einer Zuführeinrichtung der Erwärmungseinrichtung zugeführt werden. Bei dieser Zuführeinrichtung kann es sich beispielsweise um einen Sägezahnstern handeln der die Kunststoffvorformlinge transportiert.

So kann eine Markierung vor dem Aufstecken der Kunststoffvorformlinge auf die Ofengreifer bzw. Haltedorne erfolgen, z. B. während sich die Kunststoffvorformlinge in den Taschen des Sägezahnsterns befinden, wird eine Markierung im unverstreckten Bereich (z. B. auf der Tragringoberseite) des Kunststoffvorformlings mit einem Laser bzw. Druckverfahren oder mechanisch z.B. durch einen Stempel und bevorzugt spielfrei aufgebracht. Zudem werden bevorzugt die Ofenspindeln bzw. die Haltedorne vor dem Aufstecken orientiert, wodurch die Lage der Markierung zur Spindel bekannt ist. (Hier kann eine Abweichung < 1° erreicht werden)

Dabei ist es denkbar dass die Markierungen so akkurat angebracht werden und anschließend die Kunststoffvorformlinge mit einer so hohen Genauigkeit auf die Haltedorne aufgesteckt werden (bzw. die Haltedorne in die Mündungen der Kunststoffvorformlinge einfahren, dass sich ein Winkelfehler von weniger als 1° ergibt.

Bei einem weiteren bevorzugten Verfahren erfolgt das Anbringen der Markierung und/oder das Aufstecken mit einer relativ geringen Genauigkeit, etwa einem Winkelfehler von weniger als 30° sowie einer anschließenden Messung der Winkelposition, insbesondere einer Ermittlung der Lage der Markierung bezüglich einer Spindelposition, insbesondere um hierdurch einen Fehler von unter 1° zu erreichen.

Auch in diesem Fall ist es möglich, in der Blasform die Lage der Markierung relativ zu der Blasform zu messen, wobei hierzu auch eine Referenzmarkierung an der Blasform genutzt werden kann.

Daneben wäre es möglich, nach der Blasformmaschine die Position der Markierung relativ zu der Flaschenform zu messen.

Aus diesen beiden Werten d.h. der Relativstellung der Markierung bezüglich der Spindel und der Relativstellung der Markierung bezüglich der Blasform oder bezüglich des Behältnisses kann der Übergabewinkel berechnet werden.

Weitere Vorteile und Ausführungsformen ergeben sich aus den beigefügten Zeichnungen.

Darin zeigen:
- Fig. 1: eine schematische Darstellung einer erfindungsgemäßen Vorrichtung;
- Fig. 2: eine Darstellung einer Halteeinrichtung zum Halten der Kunststoffvorformlinge;
- Fig. 3: eine Draufsicht auf die Halteeinrichtung aus Figur 2;
- Fig. 4: eine Detaildarstellung der Erwärmungseinrichtung;
- Fig. 5: eine Darstellung der Stelleinrichtung zum Ändern der Drehstellung der Kunststoffvorformlinge;
- Fig. 6: eine Darstellung zur Veränderung der Drehstellung der Kunststoffvorformlinge;
- Fig. 7: eine weitere Darstellung einer Halteeinrichtung zum Halten der Kunststoffvorformlinge;
- Fig. 8: eine Draufsicht auf die Halteeinrichtung aus Figur 7;
- Fig. 9: eine schematische Darstellung einer erfindungsgemäßen Vorrichtung;
- Fig. 10: eine weitere schematische Darstellung einer erfindungsgemäßen Vorrichtung;
- Fig. 11: eine weitere schematische Darstellung einer erfindungsgemäßen Vorrichtung;
- Fig. 12: eine weitere schematische Darstellung einer erfindungsgemäßen Vorrichtung;
- Fig. 13: eine weitere schematische Darstellung einer erfindungsgemäßen Vorrichtung;
- Fig. 14: eine Darstellung einer Erfassungseinrichtung;
- Fig. 15: eine Darstellung einer Stelleinrichtung;
- Fig. 16: eine Darstellung einer Stelleinrichtung;
- Fig. 17: eine weitere Darstellung einer Stelleinrichtung;
- Fig. 18: eine Darstellung zur Veranschaulichung einer Erfassung einer Drehstellung;
- Fig. 19: eine Darstellung einer Erwärmungseinrichtung;
- Fig. 20a,b: zwei Darstellungen zur Anbringung einer Markierung an dem Boden;
- Fig. 21: eine Darstellung zur Veranschaulichung einer Erfassung einer Drehstellung;
- Fig. 22: eine Darstellung zur Veranschaulichung einer Erfassung einer Drehstellung;
- Fig. 23: eine Darstellung zur Veranschaulichung einer Erfassung einer Drehstellung; und
- Fig. 24: eine Darstellung zur Veranschaulichung einer Erfassung einer Drehstellung.

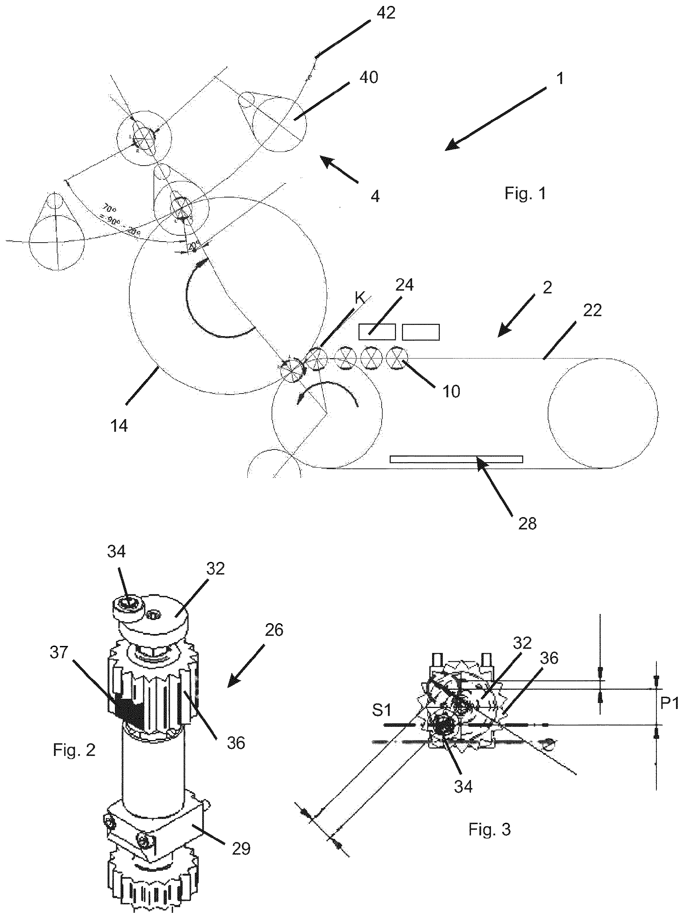

Figur 1 zeigt eine schematische Darstellung einer Vorrichtung 1 zum Herstellen von Behältnissen. Dabei bezieht sich das Bezugszeichen 2 auf eine Erwärmungseinrichtung wie einen Ofen, welcher Kunststoffvorformlinge 10 erwärmt. Bevorzugt handelt es sich dabei um eine Infrarot - Erwärmungseinrichtung. Diese Erwärmungseinrichtung weist eine nur schematisch dargestellte Transporteinrichtung 22 auf, welche hier als umlaufende Kette ausgebildet ist, an der eine Vielzahl von Halteeinrichtungen (nicht gezeigt) zum Halten der Kunststoffvorformlinge 10 angeordnet ist.

Das Bezugszeichen 24 kennzeichnet eine Erwärmungseinheit, wie etwa einen Heizkasten, der stationär bezüglich der Transporteinrichtung 22 angeordnet ist, und an dem die Kunststoffvorformlinge vorbei transportiert werden. Bei einer bevorzugten Ausführungsform sind auch an der Innenseite des Transportpfads Heizeinrichtungen vorgesehen.

Bei einer bevorzugten Ausführungsform weist die Erwärmungseinrichtung auch Kühleinrichtungen auf, welche dazu geeignet sind, eine Oberfläche der Kunststoffvorformlinge zu Kühlen, etwa durch Beaufschlagung mit Luft. Auf diese Weise kann eine gleichmäßige Erwärmung der Kunststoffvorformlinge entlang deren Wandung erreicht werden.

Wie eingangs erwähnt, sollen die Kunststoffvorformlinge an bevorzugten Bereichen 10a erwärmt werden, hier an den in Figur 1 gezeigten Bereichen. Zu diesem Zweck werden die Kunststoffvorformlinge in ihrer Drehung ausgerichtet, sodass manche Abschnitte 10a stärker erwärmt werden als andere.

Die so erwärmten Kunststoffvorformlinge werden mittels einer Transporteinrichtung 14, wie einem Transportstern an die in ihrer Gesamtheit mit 4 bezeichnete Umformungseinrichtung übergeben. Diese weist eine Vielzahl von Umformungsstationen 40 auf, die an einer Transporteinrichtung 42 wie ein Blasrad angeordnet ist. In diesen Umformungsstationen bzw. in Blasformen werden die Kunststoffvorformlinge eingegeben und zu Behältnissen umgeformt.

Zwischen der Erwärmungseinrichtung können auch mehrere Transporteinrichtungen wie etwa Transportsterne, beispielsweise wenigstens zwei und bevorzugt wenigstens drei Transporteinrichtungen angeordnet sein.

In den mit K gekennzeichneten Bereich kann eine Korrektur der Drehstellung der Kunststoffvorformlinge vorgenommen werden. In der Umformungseinrichtung 4 werden die stärker erwärmten Oberflächen der Kunststoffvorformlinge an den jeweils längeren Seiten der Blasformen ausgerichtet. Bevorzugt werden die Kunststoffvorformlinge derart ausgerichtet, dass eine Trennseite bzw. Trennebene an der Schmalseite des Behältnisses angeordnet ist. Das Bezugszeichen 28 kennzeichnet grob schematisch eine Dreheinrichtung zum Drehen der Kunststoffvorformlinge 10 bezüglich ihrer Längsrichtungen.

Figur 2 zeigt eine Darstellung einer Halteeinrichtung 26. Diese weist einen Träger 29 auf, der an einem umlaufenden Transportmittel wie einer Transportkette angeordnet sein kann. Das Bezugszeichen 32 kennzeichnet eine drehbare Platte, an der eine Kurvenrolle 34 angeordnet ist. Diese Platte ist dabei bezüglich der Längsrichtung L drehbar. Diese Längsrichtung entspricht auch der Längsrichtung des (nicht gezeigten) Kunststoffvorformlings.

Das Bezugszeichen 36 kennzeichnet ein Zahnrad bzw. einen Zahnkranz, der bezüglich einer (nicht gezeigten) stationären Zahnstange abrollen kann bzw. in diese eingreifen kann. Das Bezugszeichen 37 kennzeichnet eine Ausrichtfläche, welche zu einer Vorausrichtung der Drehstellung des Kunststoffvorformlings dient. Auf diese Weise kann eine definierte Drehstellung des Kunststoffvorformlings erreicht werden.

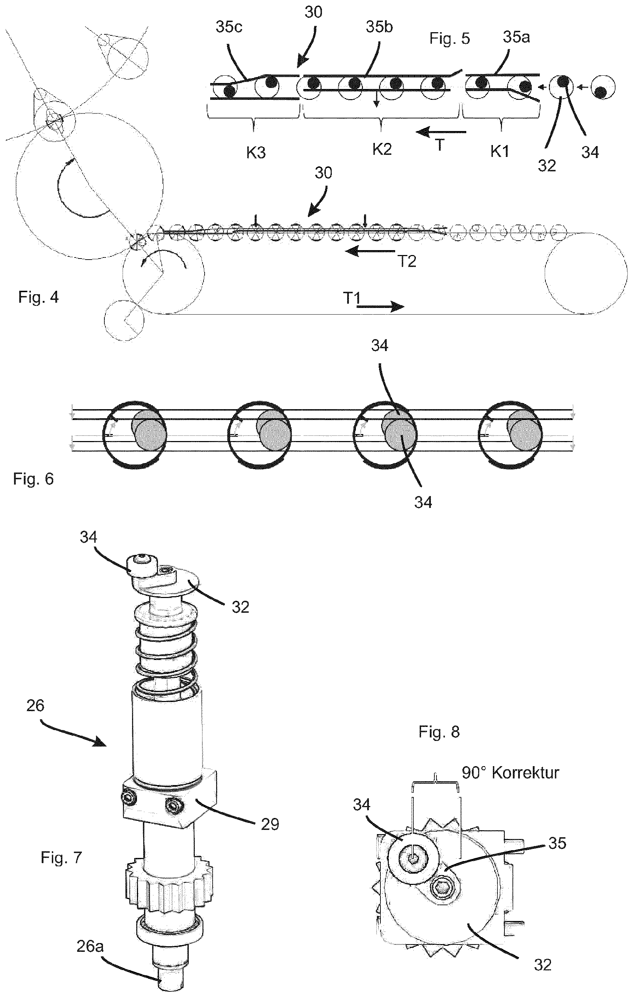

Figur 3 zeigt eine Draufsicht auf die in Figur 2 gezeigte Halteeinrichtung. Auch hier ist wieder die Kurvenrolle 34 vorgesehen, welche an der drehbaren Platte 32 angeordnet ist. Auch ist das Zahnrad 36 zu erkennen.

Das Bezugszeichen P1 kennzeichnet ein Verfahrweg einer entsprechenden Führungskurve, wenn eine Winkelkorrektur, beispielsweise um 90° vorgenommen werden soll. Das Bezugszeichen S1 kennzeichnet eine Kurvenstellung bei einem gerichteten heizen bzw. einer bevorzugten Erwärmung bestimmter Bereiche des Kunststoffvorformlings.

Figur 4 zeigt eine Detaildarstellung der in Figur 1 gezeigten Vorrichtung. Dabei kennzeichnet das Bezugszeichen 30 eine Stelleinrichtung, welche zur Ausrichtung der Kunststoffvorformlinge bzw. deren Drehstellung dient. Bevorzugt ist diese Stelleinrichtung in der zweiten Hälfte des Transportpfades, entlang dessen die Kunststoffvorformlinge während ihrer Erwärmung transportiert werden, angeordnet.

Figur 5 zeigt eine detaillierte Darstellung dieser Stelleinrichtung. Diese weist hier entlang des Transportpfads T hintereinander angeordnete Kurvensegmente 35a, 35b und 35c auf. Dabei kennzeichnet das Bezugszeichen 35a eine Fangkurve, welche dazu geeignet und bestimmt ist, die Kurvenrolle 34 einzufangen bzw. in jeder beliebigen Position zu erfassen. In dieser Fangkurve erfolgt eine Vorausrichtung der Kurvenrolle 34. An diese Fangkurve 35a schließt sich eine Prozesskurve 35b an, innerhalb derer bevorzugt eine Erwärmung der Kunststoffvorformlinge in der gegebenen Position stattfindet.

An die Prozesskurve 35b schließt sich eine Übergabekurve 35c an, welche die Drehstellung der Kunststoffvorformlinge in einer gewünschten Form ausrichtet, um so die Kunststoffvorformlinge an einer weitere Transporteinrichtung **14** zu übergeben. Bei einer bevorzugten Ausführungsform sind die Positionen der Prozesskurve und/oder der Übergabekurve veränderbar um so eine Anpassung der Drehstellung an unterschiedliche Prozessbedingungen zu erreichen.

Bei einer weiteren bevorzugten Ausführungsform weist die die Vorrichtung eine Antriebseinrichtung auf um die Prozesskurve und/oder die Übergabekurve zu verstellen. So kann beispielsweise eine elektromotorische Antriebseinrichtung vorgesehen seine, welche eine Verstellung der Prozesskurve und/oder der Übergabekurve bewirkt.

Figur 6 veranschaulicht die Übergabekurve, mittels derer eine Spindelrotation in einem Uhrzeigersinn (Draufsicht) eingeleitet wird. Dies hat zur Folge, dass die Ofen-äußere Seite des Kunststoffvorformlings in der Blasform entgegen der Rotationsrichtung des Blasrades ausgerichtet sein wird.

Figur 7 zeigt eine weitere Darstellung der Halteeinrichtung. Dabei ist auch hier wieder die Führungsrolle 34 auf der drehbaren Platte 32 dargestellt. Das Bezugszeichen 26A kennzeichnet einen Dorn, der in die Mündungen der Kunststoffvorformlinge eingreift, um diese so zu halten. Dabei kann dieser Dorn 26a auch Klemmmechanismen aufweisen, welche zum Einspannen des Kunststoffvorformlings dienen.

Figur 8 zeigt eine Draufsicht auf die in Figur 7 gezeigte Halteeinrichtung. Dabei ist auch hier wieder die Führungsrolle 34 auf einem Arm 35 angeordnet, der wiederum an der Platte 32 befestigt ist. Durch die Führungskurven ist eine 90° Korrektur der Drehstellung des Spindelantriebs bzw. der Führungsrolle möglich.

Aufgrund der bevorzugt einstellbaren bzw. verschiebbaren Prozesskurve 35b (vgl. Figur 5) können alle im Nachgang beschriebenen Konzepte auch zur Regelung bzw. Einstellung des mittleren Übergabewinkels genutzt werden. Hierzu wird bevorzugt der Antrieb der Prozesskurve in Abhängigkeit von einem gemessenen Übergabewinkel nachjustiert.

Auf diese Weise kann beispielsweise eine Prozesskontrolle von Preferential Heating Maschinen erfolgen (zum Beispiel um einem Drift des Übergabewinkels während des Warmfahrens des Ofens entgegenzuwirken).

Daneben können jedoch auch Neukundenobjekte an entsprechenden Maschinen, welche ein bevorzugtes Erwärmen erlauben genutzt werden.

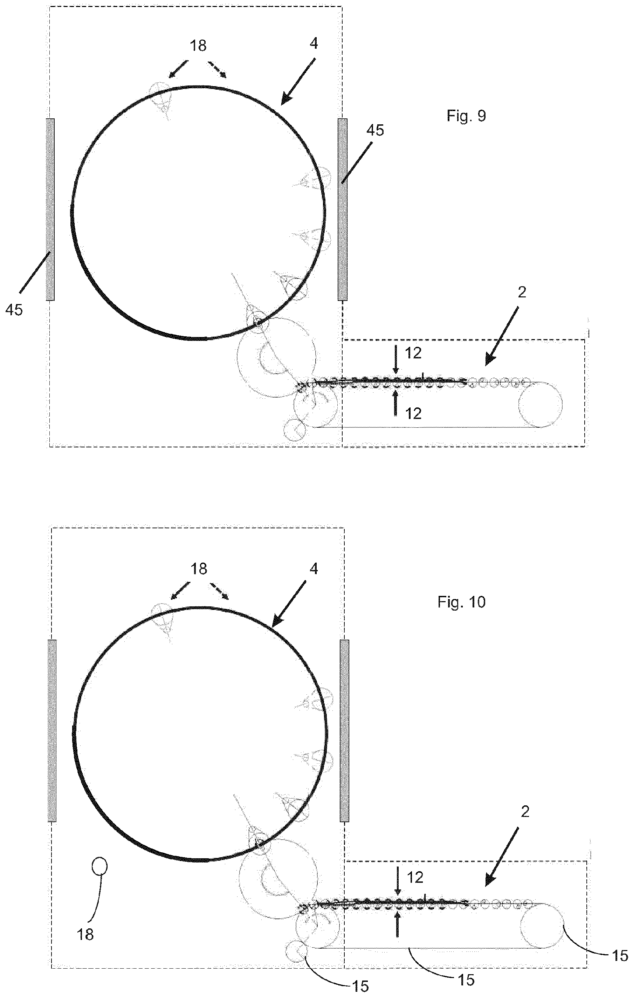

Figur 9 zeigt eine erste Darstellung einer erfindungsgemäßen Vorrichtung. Bei dieser Ausgestaltung ist eine Markierungseinrichtung 12 vorgesehen, welche an den Kunststoffvorformling eine Markierung anbringt. Wie oben erwähnt, wird dabei diese Markierung bevorzugt auf der Heißseite des Kunststoffvorformlings angebracht, d. h. demjenigen Bereich, der bevorzugt stärker erwärmt wird.

Das Bezugszeichen 18 kennzeichnet eine Erfassungseinrichtung, welche eine Position dieser Markierung erfasst. Diese Erfassungseinrichtung ist dabei bevorzugt der Umformungseinrichtung 4 zugeordnet. Die Positionierung der Erfassungseinrichtung 18 erlaubt eine gute Integrierbarkeit des Erfassungssystems in die Umformungseinrichtung. Weiterhin behindert diese Erfassungseinrichtung 18 nicht den Zugang zu der Umformungseinrichtung über die beiden Türen 45 der Umformungseinrichtung. Die Zugänglichkeit der Umformungseinrichtung wird durch die Erfassungseinrichtung 18 daher nicht behindert.

Bei der in Figur 9 gezeigten Ausgestaltung kann die Markierungseinrichtung 2 Teileinrichtungen 12 aufweisen, die an den gegenüberliegenden Seiten des Kunststoffvorformlings bzw. dessen Transportpfads angeordnet sind.

Figur 10 zeigt eine weitere Ausgestaltung einer erfindungsgemäßen Vorrichtung. Bei dieser Ausgestaltung können Ausrichteinrichtungen 15 vorgesehen sein, die beispielsweise bereits eine Ausrichtung der Drehstellung der Kunststoffvorformlinge bewirken, bevor diese in die Erwärmungseinrichtung einlaufen.

Daneben kann eine Ausrichtung auch in dem ersten Teil der Erwärmungseinrichtung stattfinden, in dem die Kunststoffvorformlinge hier von links nach rechts transportiert werden (und in dem sie bevorzugt noch gleichmäßig in Umfangsrichtung erwärmt werden. Auch ist eine Ausrichteinrichtung 15 in dem Bereich der Umlenkung denkbar. Damit kann hier an den drei gezeigten Positionen eine Ausrichteinrichtung vorgesehen sein. Diese Ausrichteinrichtung 15 bewirkt, wie erwähnt, eine Veränderung oder Ausrichtung der Drehstellung des Kunststoffvorformlings. Bevorzugt ist diese Ausrichteinrichtung 15 in der Transportrichtung der Kunststoffvorformlinge vor der Stelleinrichtung 30 angeordnet.

Daneben sind auch hier wieder mögliche Erfassungseinrichtungen bzw. Detektionssysteme 18 an der Umformungseinrichtung oder nach dieser vorgesehen.

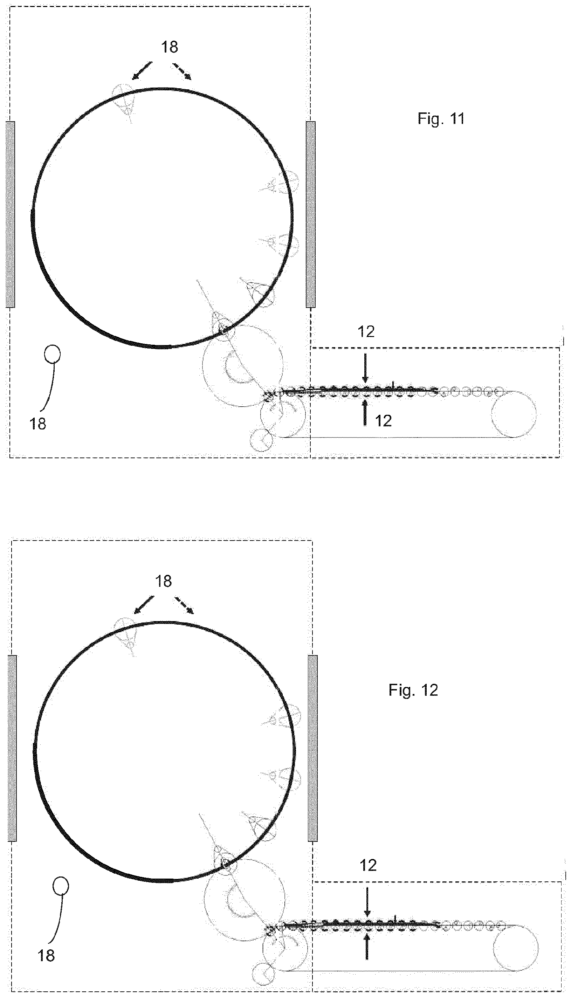

Figur **11** zeigt eine weitere Ausgestaltung der erfindungsgemäßen Vorrichtung. Bei dieser Ausgestaltung werden ebenfalls Kunststoffvorformlinge mit einer Markierung zur Neck-Orientierung eingesetzt. Diese kann während des Erwärmungsprozesses mit der Markierungseinrichtung aufgebracht werden und bevorzugt mit einem ersten Detektionssystem bzw. einer Erfassungseinrichtung (nicht gezeigt) erfasst werden, und während des Blasprozesses mit einem zweiten Detektionssystem bzw. einer zweiten Erfassungseinrichtung 18 nochmals erfasst werden. Auf diese Weise kann der Übergabewinkel errechnet werden.

Figur 12 zeigt eine weitere Darstellung einer erfindungsgemäßen Vorrichtung. Bei dieser Ausgestaltung werden Kunststoffvorformlinge mit einer umlaufenden Markierung vorgesehen, beispielsweise mit einem Strichcode am Umfang des Kunststoffvorformlings. Auch hier kann einstellungsunabhängiges Erfassen der Drehstellung des Kunststoffvorformlings erfolgen. Allerdings müssen auch hier Kunststoffvorformlinge vorgesehen sein, welche bereits eine Markierung aufweisen. Je nach den erfassten Markierungen kann hier die oben erwähnte Stelleinrichtung eine entsprechende angepasste Drehstellung der Kunststoffvorformlinge bewirken.

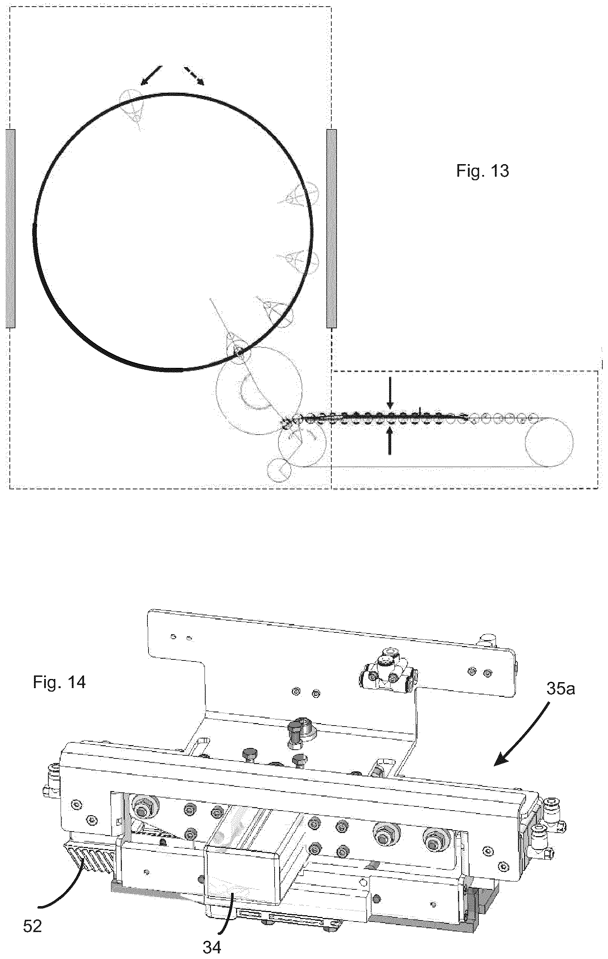

Figur 13 zeigt eine weitere Ausgestaltung einer erfindungsgemäßen Vorrichtung. Diese entspricht weitgehend der in Figur 11 gezeigten Vorrichtung. Andererseits wird jedoch hier kein Kunststoffvorformling mit einer extra Markierung vorgesehen, sondern die Drehstellung wird anhand von charakteristischen Merkmalen des Kunststoffvorformlings erfasst, beispielsweise anhand der Stellung eines Gewindes. So kann beispielsweise ein Bild des transportierten Kunststoffvorformlings aufgenommen werden und aus diesem Bild die Drehstellung erfasst werden, wobei hierzu charakteristische Merkmale wie etwa ein Gewindeanfang eingesetzt werden.

Figur 14 zeigt eine weitere Darstellung eines Teils einer erfindungsgemäßen Stelleinrichtung 30, nämlich die Fangkurve 35a. Dabei ist ein erstes Stellelement 52 vorgesehen, welches beispielsweise in der Art eines Kammes 52 ausgebildet ist, der von oben her in die oben genannte Führungsrolle der Halteeinrichtung eingreift. Das Bezugszeichen 34 kennzeichnet hier wieder die Führungsrolle, anhand derer die Drehausrichtung erfolgt.

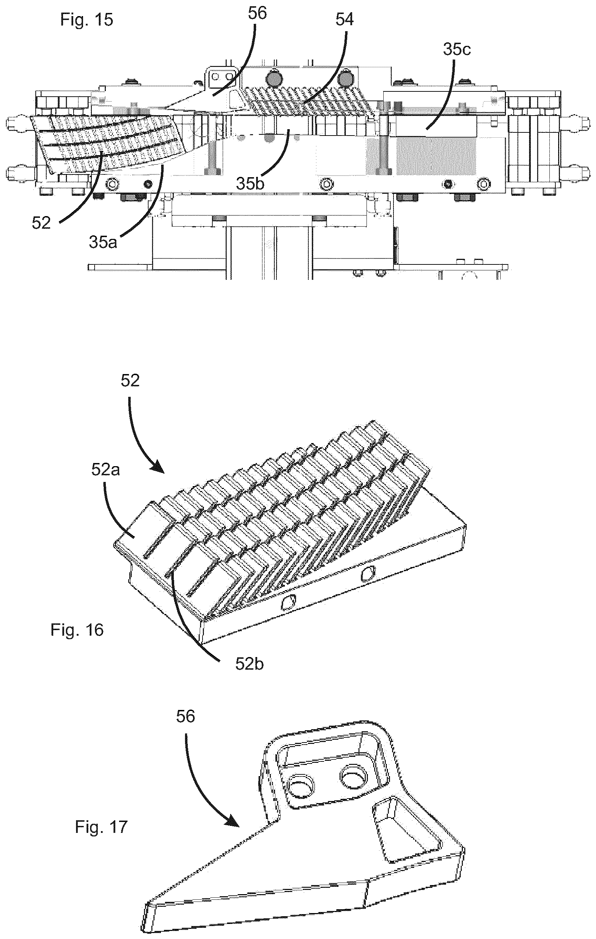

Figur 15 zeigt eine detailliertere Darstellung der Stelleinrichtung 30. Dabei ist wieder der erste Kamm 52 vorgesehen. An diesen Kamm schließt sich ein Anschlag 56 an, der die Anlenkrollen bzw. Führungsrollen gegenüber dem Spindelmittelpunkt hier um einen 45° Winkel zur Ofenaußenseite orientiert.

Da nach dieser Vororientierung die Anlenkrollen bzw. Führungsrollen noch gegenüber dem Spindelmittelpunkt um 45° vor- oder nacheilend ausgerichtet sein könnten, wird mittels einer zweiten Drängeinrichtung bzw. einem zweiten Stellelement 54 wie einem zweiten Kamm, welches bevorzugt lateral von der Erwärmungseinrichtungsaußenseite auf die Anlenkrollen bzw. Führungsrollen eingreift, sichergestellt, dass die voreilenden Anlenkrollen ebenfalls in die gewünschte Lage, d.h. 45° ofenaußenseitig gegenüber dem Spindelmittelpunkt nacheilend um orientiert werden.

Figur 16 zeigt eine Detaildarstellung des ersten Drängelements bzw. des ersten Kamms. Diese weist eine Vielzahl von Blättern 52a auf, die jeweils durch Nuten bzw. Schlitze 52b voneinander getrennt sind, sodass sie separat beweglich sind. Das Material dieser Blätter kann dabei beispielsweise ein elastisches Material und/oder ein Kunststoffmaterial sein.

Figur 17 zeigt eine Darstellung des Anschlags 56, der zur Orientierung der Anlenkrollen bzw. Führungsrollen gegenüber dem Spindelmittelpunkt dient.

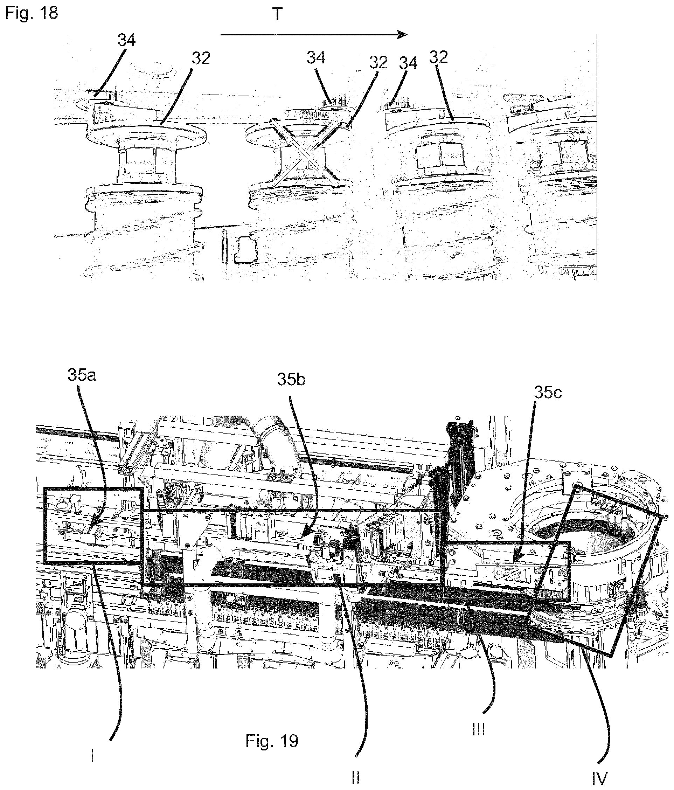

Figur 18 zeigt eine Darstellung zur Veranschaulichung der Erfindung. Hier sind insgesamt vier Halteeinrichtungen bzw. Spindelrollen vorgesehen. Man erkennt, dass bei der zweiten mit einem Kreuz gekennzeichneten Halteeinrichtung die Führungsrolle 34 in der Transportrichtung T vorauseilend ist, während die anderen Führungsrollen jeweils nacheilend sind. Dies kann beispielsweise mit einer Erfassungseinrichtung wie einer Bildauswertung erfasst werden. Bevorzugt kann dabei diese Fehlorientierung der entsprechenden Halteeinrichtung zugeordnet werden und diese gegebenenfalls im Anschluss noch korrigiert werden. Auch wäre es möglich, an den Benutzer oder Maschinenbediener ein Fehlersignal auszugeben.

Figur 19 zeigt eine Darstellung einer Erwärmungseinrichtung. Hierbei ist jeweils durch schwarze Rechtecke dargestellt, an welchen Stellen (I, II, III, IV) eine Erfassungseinrichtung oder Auswerteeinrichtung zur Erfassung der Drehstellung der Kunststoffvorformlinge angeordnet sein kann.

Wie erwähnt, kann die Überwachung der Spindelausrichtung bzw. der Drehstellung der Kunststoffvorformlinge bereits am Ende der Fangkurve 35a (I) oder im Bereich der Prozesskurve 35b (II) oder im Bereich der Übergabekurve 35c (III) oder irgendwo zwischen diesen Kurven oder im Bereich eines Steuerkopfs (IV) erfolgen.

Die Überwachung sollte aber nach dem Ausrichten und vor dem erneuten Rotieren der Spindeln auf der Kettenvorlaufseite erfolgen. Dabei ist es möglich, dass diese Überwachung mit wenigstens einer und bevorzugt einer Vielzahl von Sensoreinrichtungen erfolgt. Denkbar wären beispielsweise Näherungssensoren nach einem unterschiedlichen Funktionsprinzip oder auch Lichtschranken usw. Derartige Lichtschranken könnten sowohl oberhalb als auch seitlich neben den Anlenkrollen bzw. Führungsrollen angeordnet sein.

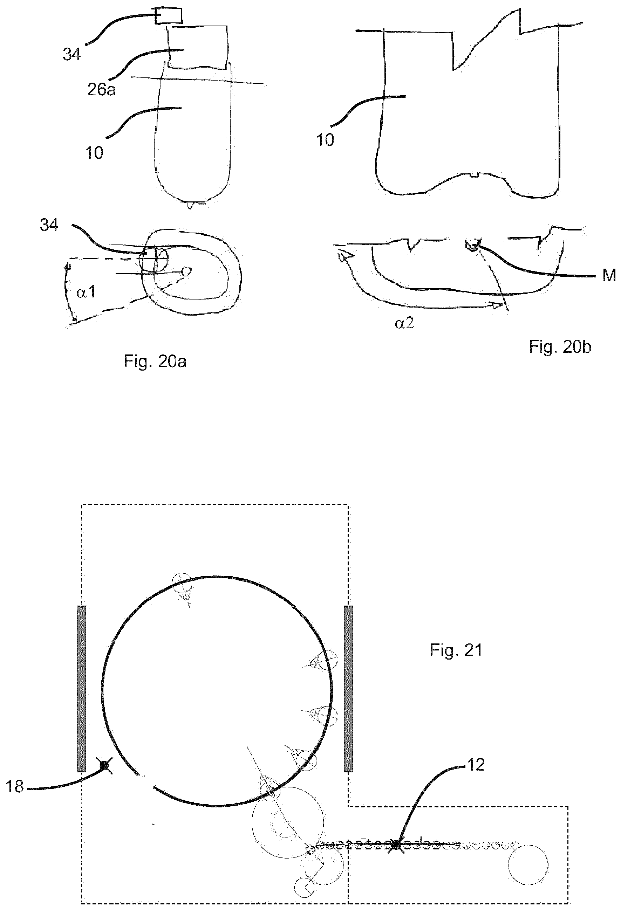

Die Fig. 20a und 20b zeigen eine weitere mögliche Vorgehensweise zur Anbringung einer Markierung an einem Kunststoffvorformling. In diesem Fall wir eine Markierung M an einer Bodenkuppe des Kunststoffvorformlings angebracht. Bevorzugt findet hier eine Inspektion des Kunststoffvorformlings in dessen axialer Richtung statt.

Bei der in Fig. 20a gezeigten Darstellung wird der von seiner Halteeinrichtung bzw. dem Haltedorn 26a gehaltene Kunststoffvorformling 10 axial von oben inspiziert bzw. ein Bild in axialer Richtung von oben aufgenommen. Dabei kann insbesondere auch die Position der Kurvenrolle 34 erfasst werden und hieraus der Winkel α1 ermittelt werden.

Bei der in Fig 20b gezeigten Darstellung wird der Kunststoffvorformling in axialer Richtung von unten aufgenommen, um die Position der Markierung M zu ermitteln. Hieraus kann der Winkel α2 ermittelt werden und aus den beiden Winkeln α1 und α2 kann insgesamt die Drehstellung des Kunststoffvorformlings ermittelt werden.

Fig. 21 zeigt eine vorteilhafte Ausgestaltung einer Erfindungsgemäßen Vorrichtung. Dabei ist eine Markierungseinrichtung 12 vorgesehen, welche an dem Kunststoffvorformling eine Markierung anbringt. Diese Markierungseinrichtung ist in demjenigen Bereich des Transportpads angeordnet, in dem der Kunststoffvorformling sich nicht bezüglich seiner Längsrichtung dreht bzw. in dem seine Drehstellung durch die Führungskurven festgelegt ist, d.h. insbesondere in dem Bereich der Stelleinrichtung 30. Die Markierung kann dabei, wie oben erwähnt an der Bodenkuppe oder auch in einem anderen Bereich des Kunststoffvorformlings, beispielsweise dessen (nicht zu verstreckenden) Mündungsbereich angeordnet werden.

Das Bezugszeichen 18 kennzeichnet eine Erfassungseinrichtung, welche hier nach der Blasformmaschine angeordnet ist und welche eine Position der Markierung erfasst.

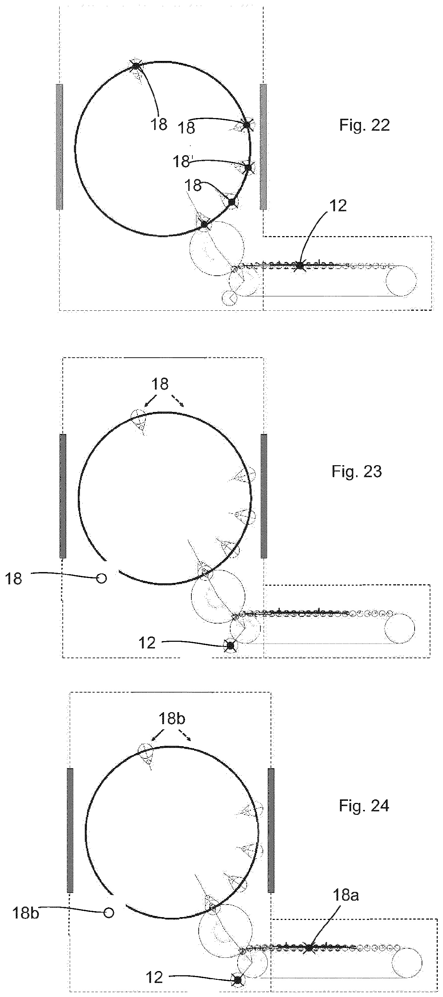

Fig. 22 zeigt eine vorteilhafte Ausgestaltung einer erfindungsgemäßen Vorrichtung. Die Anordnung der Markierungseinrichtung entspricht dabei der in Fig. 21 gezeigten Situation. Bei der in Fig. 22 gezeigten Ausführungsform ist hier jedoch jeder Umformungsstation eine Erfassungseinrichtung 18 zugeordnet, welche eine Position der Markierung erfasst.

Fig. 23 zeigt eine weitere vorteilhafte Ausgestaltung einer erfindungsgemäßen Vorrichtung. Bei dieser Ausführungsform ist eine Markierungseinrichtung vor der Erwärmungseinrichtung angeordnet, beispielsweise im Bereich eines Sägezahnsterns, der der Erwärmungseinrichtung die Kunststoffvorformlinge zuführt.

Die Inspektion der Kunststoffvorformlinge bzw. der Behältnisse findet hier mittels Detektions- und/oder Auswerteeinrichtungen statt, die an der Umformungseinrichtung und/oder nach der Umformungseinrichtung angeordnet sind. Dabei ist auch eine kumulative Auswertung an beiden Positionen denkbar und vorteilhaft. Auch diese Art der Auswertung kann bevorzugt unabhängig von der Position der Markierung vorgenommen werden. Vorteilhaft kann hier die Anordnung der Markierung an einem Bereich der Kunststoffvorformlinge sein, der nicht umgeformt bzw. verstreckt wird.

Bei der in Fig. 24 gezeigten Ausgestaltung ist eine Markierungseinrichtung 12 vor der Erwärmungseinrichtung vorgesehen und eine erste Inspektionseinrichtung 18a in dem Bereich der Stelleinrichtung 30. Eine zweite Inspektionseinrichtung 18b kann hier alternativ oder auch kumulativ an und/oder nach der Umformungseinrichtung angeordnet sein.

## Patentansprüche

1. Vorrichtung (1) zum Herstellen von Kunststoffbehältnissen (10) mit einer Erwärmungseinrichtung (2) zum Erwärmen von Kunststoffvorformlingen (10), wobei die Erwärmungseinrichtung (2) eine Transporteinrichtung (22) aufweist, welche die Kunststoffvorformlinge entlang eines vorgegebenen Transportpfads (T) vereinzelt transportiert und diese Transporteinrichtung (22) eine Vielzahl von Halteeinrichtungen (26) zum Halten der Kunststoffvorformlinge aufweist und wenigstens eine Erwärmungseinheit (24) vorgesehen ist, welche die Kunststoffvorformlinge (10) erwärmt, wobei weiterhin eine Dreheinrichtung (28) vorgesehen ist, welche die von den Halteeinrichtungen (26) gehaltenen Kunststoffvorformlinge (10) während ihres Transports durch die Erwärmungseinrichtung (2) bezüglich deren Längsrichtung dreht und mit einer Umformungseinrichtung (4), welche die von der Erwärmungseinrichtung (2) transportierten Kunststoffvorformlinge (10) zu Kunststoffbehältnissen umformt, wobei diese Umformungseinrichtung (4) wenigstens eine Umformungsstation (40) aufweist, welche die Kunststoffvorformlinge (10) durch Beaufschlagung mit einem fließfähigen Medium zu den Kunststoffbehältnissen umformt, wobei die Erwärmungseinrichtung eine Stelleinrichtung (30) aufweist, welche eine Einstellung einer Drehstellung der Kunststoffvorformlinge (10) ermöglicht und die Vorrichtung eine erste entlang des Transportpfads (T) der Kunststoffvorformlinge angeordnete Erfassungseinrichtung (18) zur Erfassung einer Drehstellung der Kunststoffvorformlinge bezüglich deren Längsrichtung aufweist, wobei die von der Umformungseinrichtung umzuformenden Kunststoffvorformlinge eine Markierung aufweisen, welche eine Erfassung der Drehstellung der Kunststoffvorformlinge ermöglichen wobei die Stelleinrichtung eine mechanisch wirkende Stelleinrichtung ist und die Stelleinrichtung eine an der Halteeinrichtung angeordnete Führungsrolle aufweist, die mit wenigstens einer ersten Führungskurve zusammenwirkt, um eine Drehstellung der Kunststoffvorformlinge einzustellen und wenigstens eine Führungskurve verstellbar ist, um die Drehstellung des Kunststoffvorformlings zu verändern, wobei eine Verstellung dieser Führungskurve in Abhängigkeit von einer Drehstellung wenigstens eines Kunststoffvorformlings durchführbar ist.

2. Vorrichtung nach Anspruch 1,
**dadurch gekennzeichnet, dass**
die Umformungseinrichtung (4) dazu geeignet und bestimmt ist, Kunststoffbehältnisse mit einem von einem kreisförmig abweichenden Querschnitt herzustellen.

3. Vorrichtung (1) nach wenigstens einem der vorangegangenen Ansprüche,
**dadurch gekennzeichnet, dass**
die Vorrichtung (1) eine Markierungseinrichtung (12) aufweist, welche dazu geeignet und bestimmt ist, an den Kunststoffvorformlingen eine Markierung (M) anzubringen, welche eine Erfassung einer Drehstellung der Kunststoffvorformlinge ermöglicht, wobei bevorzugt die Markierungseinrichtung eine lasergestützte Markierungseinrichtung oder eine Druckeinrichtung ist.

4. Vorrichtung (1) nach Anspruch 3,
**dadurch gekennzeichnet, dass**
die Markierungseinrichtung entlang des Transportpfads angeordnet ist, entlang dessen die Kunststoffvorformlinge während ihrer Erwärmung transportiert werden.

5. Vorrichtung (1) nach wenigstens einem der vorangegangenen Ansprüche,
**dadurch gekennzeichnet, dass**
die Vorrichtung (1) eine Ausrichteinrichtung aufweist, welche eine Drehstellung der Kunststoffvorformlinge bezüglich deren Längsrichtung relativ zur Halteeinrichtung 26 ausrichtet, wobei diese Ausrichtungseinrichtung bevorzugt entlang des Transportpfads der Kunststoffvorformling vor der Erwärmungseinrichtung (2) und/oder vor der Stelleinrichtung (30) angeordnet ist.

6. Vorrichtung (1) nach wenigstens einem der vorangegangenen Ansprüche,
**dadurch gekennzeichnet, dass**
die Vorrichtung mindestens eine zweite Erfassungseinrichtung (18) zur Erfassung der Drehstellung der Kunststoffvorformlinge bezüglich deren Längsrichtung aufweist.

7. Vorrichtung (1) nach dem vorangegangenen Anspruch,
**dadurch gekennzeichnet, dass**
die Stelleinrichtung wenigstens zwei und bevorzugt wenigstens drei Führungskurven aufweist, welche entlang des Transportpfads der Kunststoffvorformlinge hintereinander angeordnet sind.

8. Vorrichtung (1) nach wenigstens einem der vorangegangenen Ansprüche,
**dadurch gekennzeichnet, dass**
die Markierung der Kunststoffvorformlinge in einem Bereich einer Mündung und/oder in einem Bodenbereich des Kunststoffvorformlings angeordnet ist.

9. Verfahren zum Herstellen von Kunststoffbehältnissen (10) wobei Kunststoffvorformlinge (10) mit einer Erwärmungseinrichtung (2) erwärmt werden wobei die Erwärmungseinrichtung (2) eine Transporteinrichtung (22) aufweist, welche die Kunststoffvorformlinge entlang eines vorgegebenen Transportpfads (T) vereinzelt transportiert und diese Transporteinrichtung (22) eine Vielzahl von Halteeinrichtungen (26) aufweist, welche die Kunststoffvorformlinge halten und wenigstens eine Erwärmungseinheit (24) vorgesehen ist, welche die Kunststoffvorformlinge (10) erwärmt und wobei weiterhin eine Dreheinrichtung (28) die von den Halteeinrichtungen (26) gehaltenen Kunststoffvorformlinge (10) während ihres Transports durch die Erwärmungseinrichtung (2) bezüglich deren Längsrichtung dreht und wobei eine Umformungseinrichtung (4) die von der Erwärmungseinrichtung (2) transportierten Kunststoffvorformlinge (10) zu Kunststoffbehältnissen umformt, wobei diese Umformungseinrichtung (4) wenigstens eine Umformungsstation (40) aufweist, welche die Kunststoffvorformlinge (10) durch Beaufschlagung mit einem fließfähigen Medium zu den Kunststoffbehältnissen umformt, wobei die Erwärmungseinrichtung eine Stelleinrichtung (30) aufweist, welche eine Drehstellung der Kunststoffvorformlinge ändert und eine erste entlang des Transportpfads (T) der Kunststoffvorformlinge angeordnete Erfassungseinrichtung (6) die Drehstellung der Kunststoffvorformlinge bezüglich deren Längsrichtung erfasst, wobei die von der Umformungseinrichtung umzuformenden Kunststoffvorformlinge (10) wenigstens eine Markierung aufweisen, welche eine Erfassung der Drehstellung der Kunststoffvorformlinge ermöglicht wobei die Stelleinrichtung eine mechanisch wirkende Stelleinrichtung ist und die Stelleinrichtung eine an der Halteeinrichtung angeordnete Führungsrolle aufweist, die mit wenigstens einer ersten Führungskurve zusammenwirkt, um eine Drehstellung der Kunststoffvorformlinge einzustellen und wenigstens eine Führungskurve verstellbar ist, um die Drehstellung des Kunststoffvorformlings zu verändern, wobei eine Verstellung dieser Führungskurve in Abhängigkeit von einer Drehstellung wenigstens eines Kunststoffvorformlings durchführbar ist.

10. Verfahren nach Anspruch 9,
**dadurch gekennzeichnet, dass**
eine Markierungseinrichtung an den Kunststoffvorformlingen (10) eine Markierung M anbringt, welche die Erfassung der Drehstellung der Kunststoffvorformlinge bezüglich deren Längsrichtung ermöglicht, wobei die Markierung bevorzugt während der Erwärmung der Kunststoffvorformlinge angebracht wird.

11. Verfahren nach wenigstens einem der vorangegangenen Ansprüche,
**dadurch gekennzeichnet, dass**
die Drehstellung der Kunststoffvorformlinge mittels einer mechanischen Stelleinrichtung und insbesondere mittels wenigstens einer Führungskurve verstellt wird wobei bevorzugt eine Verstellung dieser Führungskurve in Abhängigkeit von einer Drehstellung des Kunststoffvorformlings erfolgt.

12. Verfahren nach wenigstens einem der vorangegangenen Ansprüche,
**dadurch gekennzeichnet, dass**
die Markierung in einem Bereich der Stelleinrichtung (30) oder vor der Erwärmungseinrichtung (2) angebracht wird.

13. Verfahren nach wenigstens einem der vorangegangenen Ansprüche,
**dadurch gekennzeichnet, dass**
eine Erfassungseinrichtung eine Position der Markierung erfasst und bevorzugt die Position der Markierung unmittelbar vor dem Umformungsprozess oder nach dem Umformungsprozess erfasst.

## Claims

1. Apparatus (1) for producing plastic containers (10) with a heating device (2) for heating plastic preforms (10), wherein the heating device (2) has a transport device (22) which transports the plastic preforms individually along a predetermined transport path (T), and this transport device (22) has a plurality of holding devices (26) for holding the plastic preforms and at least one heating unit (24) is provided which heats the plastic preforms (10), wherein further a rotating device (28) is also provided which rotates the plastic preforms (10) held by the holding devices (26) relative to their longitudinal direction during their transport through the heating device (2), and a forming device (4) which forms the plastic preforms (10) transported by the heating device (2) into plastic containers, wherein this forming device (4) has at least one forming station (40) which forms the plastic preforms (10) into plastic containers by applying a flowable medium, wherein the heating device has an adjusting device (30) which enables a rotational position of the plastic preforms (10) to be adjusted, and the apparatus has a first detection device (18) arranged along the transport path (T) of the plastic preforms for detecting a rotational position of the plastic preforms relative to their longitudinal direction, wherein the plastic preforms to be formed by the forming device have a marking which enables a detection of the rotational position of the plastic preforms,
wherein the adjusting device is a mechanically acting adjusting device and the adjusting device has a guide roller arranged on the holding device, which interacts with at least one first guide curve in order to adjust a rotational position of the plastic preforms, and at least one guide curve is adjustable in order to change the rotational position of the plastic preform, wherein an adjustment of this guide curve can be carried out as a function of a rotational position of at least one plastic preform.

2. Apparatus according to claim 1,
**characterized in that**
the forming device (4) is suitable and designed to produce plastic containers with a cross-section that deviates from a circular shape.

3. Apparatus (1) according to at least one of the preceding claims, **characterized in that**
the apparatus (1) has a marking device (12) which is suitable and intended to apply a marking (M) to the plastic preforms, which marking enables the rotational position of the plastic preforms to be detected, wherein the marking device is preferably a laser-based marking device or a printing device.

4. Apparatus (1) according to claim 3,
**characterized in that**
the marking device is arranged along the transport path along which the plastic preforms are transported during their heating.

5. Apparatus (1) according to at least one of the preceding claims, **characterized in that**
the apparatus (1) has an alignment device which aligns the rotational position of the plastic preforms with respect to their longitudinal direction relative to the holding device 26, wherein this alignment device is preferably arranged along the transport path of the plastic preform before the heating device (2) and/or before the adjusting device (30).

6. Apparatus (1) according to at least one of the preceding claims, **characterized in that**
the apparatus has at least one second detection device (18) for detecting the rotational position of the plastic preforms relative to their longitudinal direction.

7. Apparatus (1) according to the preceding claim,
**characterized in that**
the adjusting device has at least two and preferably at least three guide cams, which are arranged one behind the other along the transport path of the plastic preforms.

8. Apparatus (1) according to at least one of the preceding claims, **characterized in that**
the marking of the plastic preforms is arranged in an area of an opening and/or in a bottom area of the plastic preform.

9. Method for producing plastic containers (10) wherein plastic preforms (10) are heated by a heating device (2), wherein the heating device (2) has a transport device (22) which transports the plastic preforms individually along a predetermined transport path (T), and this transport device (22) has a plurality of holding devices (26) which hold the plastic preforms, and at least one heating unit (24) is provided which heats the plastic preforms (10), and wherein, furthermore, a rotating device (28) rotates the plastic preforms (10) held by the holding devices (26) relative to their longitudinal direction during their transport through the heating device (2), and wherein a forming device (4) forms the plastic preforms (10) transported by the heating device (2) into plastic containers, wherein this forming device (4) has at least one forming station (40) which forms the plastic preforms (10) into plastic containers by applying a flowable medium, wherein the heating device has an adjusting device (30) which changes a rotational position of the plastic preforms and a first detection device (6) arranged along the transport path (T) of the plastic preforms detects the rotational position of the plastic preforms relative to their longitudinal direction, wherein the plastic preforms (10) to be formed by the forming device have at least one marking which enables the rotational position of the plastic preforms to be detected,
wherein the adjusting device is a mechanically acting adjusting device and the adjusting device has a guide roller arranged on the holding device, which interacts with at least one first guide curve in order to adjust a rotational position of the plastic preforms, and at least one guide curve is adjustable in order to change the rotational position of the plastic preform, wherein an adjustment of this guide curve can be carried out as a function of a rotational position of at least one plastic preform.

10. Method according to claim 9,
**characterized in that**
a marking device applies a marking M to the plastic preforms (10), which enables the rotational position of the plastic preforms to be detected with respect to their longitudinal direction, wherein the marking is preferably applied during the heating of the plastic preforms.

11. Method according to at least one of the preceding claims, **characterized in that**
the rotational position of the plastic preforms is adjusted by a mechanical adjusting device and, in particular, by at least one guide curve, wherein an adjustment of this guide curve preferably takes place as a function of a rotational position of the plastic preform.

12. Method according to at least one of the preceding claims, **characterized in that**
the marking is applied in a region of the adjusting device (30) or in front of the heating device (2).

13. Method according to at least one of the preceding claims, **characterized in that**
a detection device detects a position of the marking and preferably detects the position of the marking immediately before the forming process or after the forming process.

## Revendications

1. Dispositif (1) pour la fabrication de récipients en plastique (10) avec un système de chauffage (2) pour chauffer des préformes en plastique (10), dans lequel le système de chauffage (2) présente un système de transport (22), lequel transporte séparément les préformes en plastique le long d'un trajet de transport (T) prédéfini et ce système de transport (22) présente une pluralité de systèmes de maintien (26) pour maintenir les préformes en plastique et au moins une unité de chauffage (24) est prévue, laquelle chauffe les préformes en plastique (10), dans lequel un système de rotation (28) est en outre prévu, lequel fait tourner les préformes en plastique (10) maintenues par les systèmes de maintien (26) pendant leur transport à travers le système de chauffage (2) par rapport à leur direction longitudinale et avec un système de façonnage (4), lequel façonne les préformes en plastique (10) transportées par le système de chauffage (2) en récipients en plastique, dans lequel ce système de façonnage (4) présente au moins une station de façonnage (40), laquelle façonne les préformes en plastique (10) en récipients en plastique par sollicitation avec un milieu fluide, dans lequel le système de chauffage présente un système de réglage (30), lequel permet un réglage d'une position de rotation des préformes en plastique (10) et le dispositif présente un premier système de détection (18) disposé le long du trajet de transport (T) des préformes en plastique pour détecter une position de rotation des préformes en plastique par rapport à leur direction longitudinale, dans lequel les préformes en plastique destinées à être façonnées par le système de façonnage présentent un marquage, lequel permet une détection de la position de rotation des préformes en plastique,
dans lequel le système de réglage est un système de réglage à action mécanique et le système de réglage présente un galet de guidage disposé sur le système de maintien, qui interagit avec au moins une première came de guidage pour régler une position de rotation des préformes en plastique et au moins une came de guidage est ajustable, afin de modifier la position de rotation de la préforme en plastique, dans lequel un ajustement de cette came de guidage peut être effectué en fonction d'une position de rotation d'au moins une préforme en plastique.

2. Dispositif selon la revendication 1,
**caractérisé en ce que**
le système de façonnage (4) est adapté pour et destiné à fabriquer des récipients en plastique avec une section transversale différente d'une forme circulaire.

3. Dispositif (1) selon au moins l'une quelconque des revendications précédentes,
**caractérisé en ce que**
le dispositif (1) présente un système de marquage (12), lequel est adapté pour et destiné à apposer un marquage (M) sur les préformes en plastique, lequel permet une détection d'une position de rotation des préformes en plastique, dans lequel le système de marquage est de préférence un système de marquage laser ou un système d'impression.

4. Dispositif (1) selon la revendication 3,
**caractérisé en ce que**
le système de marquage est disposé le long du trajet de transport le long duquel les préformes en plastique sont transportées pendant leur chauffage.

5. Dispositif (1) selon au moins l'une quelconque des revendications précédentes,
**caractérisé en ce que**
le dispositif (1) présente un système d'alignement, lequel oriente une position de rotation des préformes en plastique par rapport à leur direction longitudinale et relativement au système de maintien (26), dans lequel ce système d'alignement est de préférence disposé le long du trajet de transport des préformes en plastique devant le système de chauffage (2) et/ou devant le système de réglage (30).

6. Dispositif (1) selon au moins l'une quelconque des revendications précédentes,
**caractérisé en ce que**
le dispositif présente au moins un deuxième système de détection (18) pour la détection de la position de rotation des préformes en plastique par rapport à leur direction longitudinale.

7. Dispositif (1) selon la revendication précédente,
**caractérisé en ce que**
le système de réglage présente au moins deux et de préférence au moins trois cames de guidage, lesquelles sont disposées les unes derrière les autres le long du trajet de transport des préformes en plastique.

8. Dispositif (1) selon au moins l'une quelconque des revendications précédentes,
**caractérisé en ce que**
le marquage des préformes en plastique est disposé dans une zone d'une bouche et/ou dans une zone de fond de la préforme en plastique.

9. Procédé de fabrication de récipients en plastique (10) dans lequel les préformes en plastique (10) sont chauffées avec un système de chauffage (2), dans lequel le système de chauffage (2) présente un système de transport (22), lequel transporte séparément les préformes en plastique le long d'un trajet de transport (T) prédéfini et ce système de transport (22) présente une pluralité de systèmes de maintien (26), lesquels maintiennent les préformes en plastique et au moins une unité de chauffage (24) est prévue, laquelle chauffe les préformes en plastique (10) et dans lequel en outre un système de rotation (28) fait tourner les préformes en plastique (10) maintenues par les systèmes de maintien (26) pendant leur transport à travers le système de chauffage (2) par rapport à leur direction longitudinale et dans lequel un système de façonnage (4) façonne les préformes en plastique (10) transportées par le système de chauffage (2) en récipients en plastique, dans lequel ce système de façonnage (4) présente au moins une station de façonnage (40), laquelle façonne les préformes en plastique (10) en récipients en plastique par sollicitation avec un milieu fluide, dans lequel le système de chauffage présente un système de réglage (30), lequel modifie une position de rotation des préformes en plastique et un premier système de détection (6) disposé le long du trajet de transport (T) des préformes en plastique détecte la position de rotation des préformes en plastique par rapport à leur direction longitudinale, dans lequel les préformes en plastique (10) destinées à être façonnées par le système de façonnage présentent un marquage, lequel permet une détection de la position de rotation des préformes en plastique,
dans lequel le système de réglage est un système à action mécanique et le système de réglage présente un galet de guidage disposé sur le système de maintien, qui interagit avec au moins une première came de guidage pour régler une position de rotation des préformes en plastique et au moins une came de guidage peut être ajustée, afin de modifier la position de rotation de la préforme en plastique, dans lequel un ajustement de cette came de guidage peut être effectué en fonction d'une position de rotation d'au moins une préforme en plastique.

10. Procédé selon la revendication 9,
**caractérisé en ce que**
un système de marquage appose un marquage M sur les préformes en plastique (10), lequel permet la détection de la position de rotation des préformes en plastique par rapport à leur direction longitudinale, dans lequel le marquage est de préférence apposé pendant le chauffage des préformes en plastique.

11. Procédé selon au moins l'une quelconque des revendications précédentes,
**caractérisé en ce que**
la position de rotation des préformes en plastique est ajustée au moyen d'un système de réglage mécanique et notamment au moyen d'au moins une came de guidage, dans lequel un ajustement de cette came de guidage est de préférence effectué en fonction d'une position de rotation de la préforme en plastique.

12. Procédé selon au moins l'une quelconque des revendications précédentes,
**caractérisé en ce que**
le marquage est apposé dans une zone du système de réglage (30) ou devant le système de chauffage (2).

13. Procédé selon au moins l'une quelconque des revendications précédentes,
**caractérisé en ce que**
un système de détection détecte une position du marquage et de préférence détecte la position du marquage immédiatement avant le processus de façonnage ou après le processus de façonnage.
